(19) Europäisches Patentamt
European Patent Office
Office européen des brevets

(11) **EP 1 313 095 B1**

(12) **EUROPEAN PATENT SPECIFICATION**

(45) Date of publication and mention
of the grant of the patent:
**15.10.2008 Bulletin 2008/42**

(51) Int Cl.:
*G11B 7/12* (2006.01)     *G11B 7/135* (2006.01)

(21) Application number: **02257141.8**

(22) Date of filing: **15.10.2002**

(54) **Compatible optical pickup**

Kompatibles optisches Abstastgerät

Tête de lecture optique compatible

(84) Designated Contracting States:
**DE FR GB NL**

(30) Priority: **15.11.2001 KR 2001071094**
**23.07.2002 KR 2002043282**

(43) Date of publication of application:
**21.05.2003 Bulletin 2003/21**

(73) Proprietor: **SAMSUNG ELECTRONICS CO. LTD.**
**Suwon-city,**
**Kyounggi-do 441-742 (KR)**

(72) Inventors:
• **Kim, Tae-kyung**
**Youngdeungpo-gu,**
**150-044 Seoul (KR)**
• **Ahn, Young-man**
**Gwonseon-gu,**
**Suwon-si,**
**Gyeonggi-do (KR)**
• **Chung, Chong-sam**
**Paldal-gu,**
**Suwon-si,**
**Gyenggi-do (KR)**
• **Suh, Hae-jung**
**Taean-eup,**
**Hwaseonog-si,**
**Gyeonggi-do (KR)**
• **Lee, Jin-kyung**
**Suwon-si,**
**Gyeonggi-do (KR)**
• **Kim, Jong-bae**
**Mapo-gu,**
**Seoul (KR)**

(74) Representative: **Davies, Robert Ean et al**
**Appleyard Lees**
**15 Clare Road**
**Halifax HX1 2HY (GB)**

(56) References cited:
**EP-A- 1 154 417       WO-A-00/65583**
**WO-A-01/48746       US-A- 5 815 293**
**US-A- 5 872 761**

• **PATENT ABSTRACTS OF JAPAN vol. 2000, no. 25, 12 April 2001 (2001-04-12) -& JP 2001 209966 A (PIONEER ELECTRONIC CORP), 3 August 2001 (2001-08-03)**
• **PATENT ABSTRACTS OF JAPAN vol. 2000, no. 21, 3 August 2001 (2001-08-03) -& JP 2001 093179 A (PIONEER ELECTRONIC CORP), 6 April 2001 (2001-04-06) & US 6 449 095 B1 (OHTAKI SAKASHI ET AL) 10 September 2002 (2002-09-10)**

**Description**

The present invention relates to a compatible optical pickup which can record onto and/or reproduce from each of a plurality of optical discs having different formats by using light beams having a plurality of wavelengths, and more particularly, to a compatible optical pickup for corrections chromatism generated in an objective lens due to a change in output of a light source when a record and/or reproduction mode is switched with respect to a high density optical disc.

In an optical recording and/or reproducing apparatus for recording or reproducing information with respect to an optical disc by using a light spot formed by an objective lens, the capacity of recording is determined by the size of the light spot. The size S of the light spot is proportional to the wavelength $\lambda$ of a light beam and inversely proportional to numerical aperture (NA) of the objective lens, as shown in the following inequality.

$$[\text{Equation 1}]$$

$$S \propto \lambda / NA$$

Accordingly, to reduce the size of the light spot focused on an optical disc for high densification of the optical disc, a short wavelength light source such as a blue-violet laser and an objective lens having an NA of 0.6 or more are necessary.

Thus, an optical pickup for a next generation DVD, so called an HD-DVD (high definition-digital versatile disc), that is currently under development, adopts a light source for emitting a blue-violet light beam and an objective lens having an NA of 0.6 or more, to obtain a high information recording density than an information recording density of a conventional optical disc of a CD or DVD family, by reducing the size of a light spot formed on the optical disc.

However, an optical material such as glass and plastic used for an objective lens of a typical optical pickup exhibits a very sharp change in refractive index in a range of a wavelength shorter than 650 nm.

Table 1 shows a change in refractive index according to a wavelength of M-BaCD5N manufactured by Hoya which is used as a material for glass for molding an objective lens.

[Table 1]

| Change in wavelength | Change in refractive index of Hoya's M-BaCD5N glass |
|---|---|
| 650 nm → 651 nm | 0.000038 |
| 405 nm → 406 nm | 0.000154 |

As can be seen from Table 1, the optical material shows a great change in refractive index by about four times in a range of a blue-violet wavelength compared to a red wavelength used for an optical pickup for a DVD, with respect to a small change in wavelength by about 1 nm.

The sharp change in refractive index of the optical material in a short wavelength mainly causes deterioration of performance according to defocus in a recordable high density optical pickup capable of repeatedly switching between recording and reproduction. That is, the optical pickup uses a recording optical power and a reproduction optical power which are different from each other. In general, if the output of a light source is increased, the wavelength of a light beam emitted from the light source becomes elongated. Chromatism generated in the objective lens due to a change in wavelength according to a change in the optical power during mode switch between recording and reproduction causes defocus (defocus according to mode hopping). Here, the mode hopping means a phenomenon in which a wavelength increases or decreases intermittently under the conditions of the light source, for example, a change in temperature. When an input current is increased to increase the optical power, the temperature in the light source increases due to the internal heat. Thus, the above mode hopping occurs.

Although the defocus due to the change in wavelength can be corrected by adjusting the objective lens by an actuator, since it takes relatively long time to follow the change in wavelength by driving the actuator, the quality of reproduced and recorded signals is deteriorated during the above time. The defocus generated when the optical power is increased for recording causes a lack of recording optical power while the defocus when the optical power is decreased for reproduction increases jitter.

That is, when the output of the light source is increased to record information on the optical disc, the wavelength of the light beam emitted from the light source is elongated to, for example, 406 nm, so that the light spot is defocused and recording cannot be performed appropriately until the actuator follows the defocus. When the output of the light source is decreased for reproduction, the wavelength of the light source is shortened to, for example, 405 nm. In this case, since the actuator is in a state of following the elongated wavelength, defocus is generated again. When the defocus is generated, jitter increases in a reproduction signal according to a reproduction signal.

Thus, the optical pickup for high density recording and reproduction needs to have an optical system structure capable of restricting generation of chromatism or compensating therefore, even when the wavelength of the light beam emitted from the light source changes according to a change between recording and reproduction output.

In the meantime, assuming that an inclination angle of an optical disc is θ, a refractive index of the optical disc is n, a thickness of the optical disc is d, and an NA of an objective lens is NA, coma aberration W31 generated by the inclination of an optical disc can be expressed as follows.

[Equation 2]

$$W_{31} = -\frac{d}{2} \frac{n^2(n^2-1)\sin\theta\cos\theta}{(n^2-\sin^2\theta)^{5/2}} NA^3$$

Here, the refractive index and thickness of the optical disc indicate those of an optical medium from each of light incident surfaces to a recording surface.

Considering Equation 2, to secure allowance by the inclination of an optical disc, as NA of the objective lens increases for high density, the thickness of the optical disc needs to be reduced. Accordingly, the thickness of a DVD is reduced to 0.6 mm from 1.2 mm of a CD. The thickness of an HD-DVD may be reduced to 0.1 mm. Of course, the NA of an objective lens of a DVD is increased to 0.6 from 0.45 of a CD. In the case of an HD-DVD, the NA of an objective lens may increase to 0.85 mm. Also, considering the recording capacity of the HD-DVD, a blue-violet light source is very likely to be adopted. In developing an optical disc having such a new specification, compatibility with a conventional optical disc is important.

For example, since the reflectance of a DVD-R or CD-R of conventional optical discs which is recordable only one time is drastically lowered according to a wavelength, use of a light source of a wavelength of 650 nm and 780 nm is necessary. Thus, considering the compatibility with a DVD-R and/or CD-R, a compatible optical pickup for recording and/or reproducing an HD-DVD needs to adopt two or three light sources having different wavelengths.

Here, a compatible optical pickup adopting a plurality of light sources having different wavelengths preferably includes a single objective lens considering various merits such as the size of an apparatus, easiness in assembly, and cost.

However, design and manufacturing of an objective lens having a high NA of 0.85 into one unit requires a high technology and it is difficult to have a working distance lengthy like an objective lens for a DVD, while maintaining a high NA. In the field of the present technology, an objective lens is typically designed to have a working distance of 0.6 mm with respect to a blue-violet light source and an HD-DVD having a thickness of 0.1 mm. When the light beam emitted from a light source for a DVD and a light source for a CD is focused by an objective lens having a working distance of 0.6 mm with respect to an HD-DVD and forms a light spot on the DVD and CD, the working distance is 0.32 mm and -0.03 mm, respectively, which means the CD collides with the objective lens.

When the light beam emitted from the light source for a CD is input to the objective lens in form of a divergent light beam by reducing the distance between the light source for a CD and a collimating lens, the working distance can be secured. However, in this case, since the optical system is a finite optical system, an aberration characteristic according to the movement of the actuator in a radial direction is sharply deteriorated which is not preferable.

In summary, a recordable high density optical pickup capable of repeatedly recording and reproducing by using a light source having a shorter wavelength than a red wavelength needs an optical system structure which can restrict or compensate for defocus during switching between recording and reproduction modes. Also, the high density optical pickup needs to have lengthy working distance with respect to the light beam for a DVD and/or CD considering the compatibility with a relatively low density DVD and/or CD.

Bearing in mind the above-described problems, it is an aim of the present invention to provide a compatible optical pickup which can reduce defocus according to a mode hopping of a short wavelength light source. Another aim of the present invention is to provide an optical pickup suitable for use with both a short wavelength light source and at least one long wavelength light source by which, when operating with a low density optical disc having a relatively great thickness, a sufficient working distance is secured so that an objective lens and the low density optical disc do not collide with each other.

The preamble of claim 1 is known from the documents JP-2001-209966-A, JP-2001-093179-A and EP-A-1154417.

According to the present invention there is provided a compatible optical pickup according to claim 1.

It is preferred in the present invention that the short wavelength light beam and the long wavelength light beam are polarized orthogonally each other, and the diffractive device is a polarizing holographic device which diffracts a short wavelength light beam having one polarization and transmits a long wavelength light beam having a different polarization orthogonal to the short wavelength light beam, as it is.

It is preferred in the present invention that the polarizing holographic device is of a blazed type to improve an efficiency of first diffraction with respect to the short wavelength light beam.

It is preferred in the present invention that the low density optical disc comprises first and second low density optical discs having different recording density and thickness, and the long wavelength light beam comprises a first long wavelength light beam having a wavelength of $\lambda 1$ suitable for the first low density optical disc and a second long wavelength light beam having a wavelength of $\lambda 2$ suitable for the second low density optical disc.

It is preferred in the present invention that the low density optical disc comprises first and second low density optical discs having different recording density and thickness, the long wavelength light beam comprises a first long wavelength light beam having a wavelength of $\lambda 1$ suitable for the first low density optical disc and a second long wavelength light beam having a wavelength of $\lambda 2$ suitable for the second low density optical disc, the diffractive device is a holographic device where a pattern having a stepped structure is formed, and when refractive indices of an optical medium forming the holographic device are n11 and n22 with respect to the wavelengths $\lambda 1$ and $\lambda 2$ of the first and second long wavelength light beams, the size of a step d of the pattern satisfies following equations:

$$(n11-n0')d=g\lambda 1,$$

and

$$(n22-n0'')d=h\lambda 2,$$

where g and h are numbers within a range of integer$\pm 0.07$, and n0' and n0" are refractive indices of an air portion with respect to the wavelengths of $\lambda 1$ and $\lambda 2$, respectively.

It is preferred in the present invention that a blazed type pattern is formed in the diffractive device.

It is preferred in the present invention that the first and second low density optical discs are a DVD family and a CD family, respectively, the high density optical disc has a thickness thinner than the first low density optical disc, and the high density optical disc has a thickness of about 0.1 mm.

It is preferred in the present invention that the objective lens has an NA of 0.7 or more suitable for the high density optical disc.

It is preferred in the present invention that a working distance of the objective lens is not more than 0.7 mm.

It is preferred in the present invention that the compatible optical pickup further comprises first and second phase correctors for correcting aberration generated when the first and second low density optical discs are adopted, by generating a change in phase difference with respect to the first and second long wavelength light beams.

It is preferred in the present invention that each of the first and second phase correctors has a plurality of phase delay areas, and when the amounts of phase delay when the short wavelength light beam having a wavelength of $\lambda$ and the second long wavelength light beam having a wavelength of $\lambda 2$ pass through one phase delay area of the first phase corrector are a and a', and the amounts of phase delay when the short wavelength light beam and the second long wavelength light beam pass through the other phase delay area of the first phase corrector adjacent to the one phase delay area are b and b', the first phase corrector satisfies following equations:

$$(a-b)=l\lambda,$$

and

$$(a'-b')=m\lambda 2,$$

where , l and m are numbers within a range of integer±0.07, and when the amounts of phase delay when the short wavelength light beam having a wavelength of λ and the first long wavelength light beam having a wavelength of λ1 pass through one phase delay area of the second phase corrector are c and c', respectively, and the amounts of phase delay when the short wavelength light beam and the first long wavelength light beam pass through the other phase delay area of the second phase corrector adjacent to the one phase delay area are d and d', respectively, the second phase corrector satisfies following equations:

$$(c-d)=p\lambda,$$

and

$$(c'-d')=q\lambda 1,$$

where p and q are numbers within a range of integer±0.07.

It is preferred in the present invention that a pattern having a stepped structure is formed in the first phase corrector, the step of the pattern corresponds to the respective phase delay areas, and when refractive indices of an optical medium forming the first phase corrector with respect to the wavelengths of λ and λ2 are n and n2, respectively, the size s1 of the step of the pattern satisfies following equations:

$$(n-n0)s1=l\lambda,$$

and

$$(n2-n0'')s1=m\lambda 2,$$

where n0' and n0" are refractive indices of an air portion with respect to the wavelengths of λ and λ2, respectively.

It is preferred in the present invention that a pattern having a stepped structure is formed in the second phase corrector, the step of the pattern corresponds to the respective phase delay areas, and when refractive indices of an optical medium forming the second phase corrector with respect to the wavelengths of λ and λ1 are n' and n1', respectively, the size s2 of the step of the pattern satisfies following equations:

$$(n'-n0)s2=p\lambda,$$

and

$$(n1'-n0')s2=q\lambda 1,$$

where n0 and n0' are refractive indices of an air portion with respect to the wavelengths of λ and λ1, respectively.

It is preferred in the present invention that the compatible optical pickup further comprises an aperture filter for changing an effective NA of the objective lens with respect to one of the first and second long wavelength light beams suitable for recording and/or reproduction of one of the first and second low density optical discs.

It is preferred in the present invention that the aperture filter is one of a wavelength selective coating member and a holographic diffractive member which are formed to allow a light beam incident at a central portion of the aperture filter to proceed, as it is, and selectively prevent a light beam incident outside the central portion according to a wavelength of the incident light beam.

It is preferred in the present invention that the aperture filter is integrally formed with one of the first and second phase correctors.

It is preferred in the present invention that the short wavelength light beam is in a blue-violet wavelength area, the first long wavelength light beam is in a red wavelength area, and the second long wavelength light beam is in an infrared wavelength area, and that the λ is substantially in a range between 400-410 nm, the λ1 is substantially one of 635 nm and 650 nm, and the λ2 is substantially 780 nm.

It is preferred in the present invention that the diffractive device and the divergent lens are integrally driven with the objective lens.

It is preferred in the present invention that the compatible optical pickup further comprises a wave plate to improve an efficiency of light with respect to the short wavelength light beam.

For a better understanding of the invention, and to show how embodiments of the same may be carried into effect, reference will now be made, by way of example, to the accompanying diagrammatic drawings in which:

Figure 1 is a view illustrating a compatible optical pickup according to a preferred embodiment of the present invention;

Figure 2 is a view for explaining a preferred embodiment of a non-polarization type diffractive device adopted in the preferred compatible optical pickup device;

Figure 3 is a graph showing a phase difference between a wavelength λ1 of a first long wavelength light and a wavelength λ2 of a second long wavelength light according to the size of a step d, when M-LaC130_HOYA is used as an optical medium of the non-polarization diffractive device of Figure 2;

Figure 4 is a view for explaining a preferred embodiment of first and second phase correctors adopted in the preferred compatible optical pickup;

Figure 5 is a graph showing a phase difference between a wavelength λ of a short wavelength light for an HD-DVD and the wavelength λ2 of the second long wavelength light for a CD according to the size of a step s1, when BK7 is used as an optical medium of the first phase corrector;

Figure 6 is a view showing a first preferred embodiment of the preferred optical structure of the compatible optical pickup according to the present invention;

Figures 7A, 7B, and 7C are views showing a change in polarization in a short wavelength light, and first and second long wavelength lights when the short wavelength light and the first and second long wavelength lights are polarized perpendicular to each other and a polarization type diffractive device is provided in Figure 1;

Figure 8 is a view showing a second preferred embodiment of the preferred optical structure of the compatible optical pickup according to the present invention;

Figures 9A through 9C are views showing the optical path of the short wavelength light, and the first and second long wavelength lights when the compatible optical pickups shown in Figures 6 and 8 are divided by an optical system contributing to recording and/or reproduction of an HD-DVD, DVD and CD;

Figure 10A is a view showing chromatism by the objective lens itself when the wavelength is extended by 1 nm by a mode hopping;

Figure 10B is a view showing chromatism in a case in which the first light source, a collimating lens, a diffractive device, and an objective lens are adopted in the preferred compatible optical pickup according to the present invention, when the wavelength is extended by 1 nm by a mode hopping;

Figure 11 is a graph showing a phase difference between the wavelength λ of the short wavelength light beam for an HD-DVD and the wavelength λ2 of the second long wavelength light beam for a CD according to the size of the step s1, when FCD1 is used as an optical medium of the first phase corrector;

Figure 12 is a graph showing a phase difference between the wavelength λ of the short wavelength light beam for an HD-DVD and the wavelength λ1 of the first long wavelength light beam for a DVD according to the size of the step s2, when M-NbFD83 is used as an optical medium of the second phase corrector;

Figure 13 is a view showing a phase difference, in two dimensions, corresponding to a spherical aberration to be corrected when a DVD is adopted;

Figure 14 is a view showing a change in phase difference, in two dimensions, generated in the first phase corrector in which a pattern having a 5-step structure is formed to correct the phase difference (aberration) shown in Figure 13;

Figure 15 is a view showing a one-dimensional section of the phase difference obtained by overlapping Figure 13 and Figure 14;

Figure 16A is a view showing a phase difference remaining by the first phase corrector during recording and/or reproduction of a CD;

Figure 16B is a view showing a phase difference remaining by the first phase corrector during recording and/or reproduction of a HD-DVD;

Figure 17 is a view showing a phase difference, in two dimensions, corresponding to a spherical aberration to be corrected when a CD is adopted;

Figure 18 is a view showing a change in phase difference, in two dimensions, generated in the second phase corrector in which a pattern having a 2-step structure to correct the phase difference (aberration) shown in Figure 17 is formed;

Figure 19 is a view showing a one-dimensional section of the phase difference obtained by overlapping Figure 17 and Figure 18;

Figure 20A is a view showing a phase difference remaining by the second phase corrector during recording and/or reproduction of a DVD; and

Figure 20B is a graph showing a phase difference remaining by the second phase corrector during recording and/or reproduction of a HD-DVD.

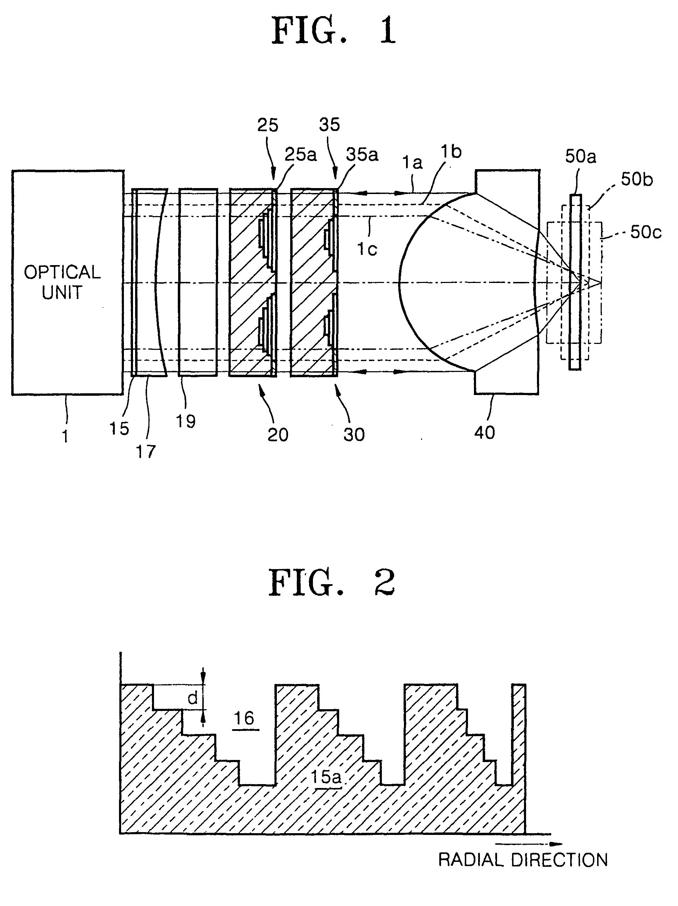

Referring to Figure 1, a compatible optical pickup according to the preferred embodiment of the present invention includes an optical unit 1, an objective lens 40 for focusing a short wavelength light beam and a long wavelength light beam emitted from the optical unit 1 and forming light spots on a high density optical disc 50a and low density optical discs 50b and 50c, a diffractive device 15 for diffracting the short wavelength light beam emitted from the optical unit 1, and a divergent lens 17 for increasing a working distance with respect to at least one of the low density optical discs 50b and 50c by refracting the long wavelength light beam proceeding toward the objective lens 40 from the optical unit 1.

The optical unit 1 emits a short wavelength light beam 1a suitable for the high density optical disc 50a and at least one of long wavelength light beams 1b and 1c suitable for at least one sort of the low density optical discs 50b and 50c, so that recording and/or reproduction can be performed compatibly with the high density optical disc 50a and at least one sort of the low density optical discs 50b and 50c. The optical unit 1 receives the light beams reflected by the high density optical disc 50a and the low density optical discs 50b and 50c to detect an information signal and an error signal.

The high density optical disc 50a can have a thickness thinner than a DVD, for example, an optical disc in an optical disc in a next generation DVD family having a capacity of 20 GB or more (hereinafter, referred to as "HD-DVD"). First and second low density optical discs 50b and 50c having different recording densities and thickness can be provided as the low density optical discs 50b and 50c. When the high density optical disc 50a is a HD-DVD, the first low density optical disc is an optical disc in a DVD family (hereinafter, referred to as "DVD") and the second low density optical disc 50c is an optical disc in a CD family (hereinafter, referred to as "CD").

When the compatible optical pickup records and/or reproduces three kinds of optical discs having different recording densities, that is, the high density optical disc 50a, and the first and second low density optical discs 50b and 50c, the long wavelength light beams 1b and 1c become the first long wavelength light beam 1b having a wavelength of $\lambda 1$ suitable for the first low density optical disc 50b and the second long wavelength light beam 1c having a wavelength of $\lambda 2$ suitable for the second low density optical disc 50c.

When the compatible optical pickup is provided to compatibly record and/or reproduce a CD, a DVD, or an HD-DVD, it is preferable that the short wavelength light beam 1a is a light beam having a wavelength in a range of a blue-violet wavelength area, for example, in a range between 400-410 nm, the first long wavelength light beam 1b is a light beam having a wavelength in a range of a red wavelength area, for example, a wavelength of 635 or 650 nm, and the second long wavelength light beam 1c is a light beam having a wavelength in a range of an infrared area, for example, about 780 nm.

The objective lens 40 has an NA of 0.7 or more, preferably, 0.85, to record and/or reproduce the high density optical disc 50a. Ideally, the objective lens 40 has a working distance of not more than 0.7 mm. This is because the working distance can be increased by the divergent lens 17 when the first and/or second low density optical discs 50b and 50c having thickness thicker than the high density optical disc 50a is adopted, so that the objective lens 40 is prevented from colliding against the first and second low density optical discs 50b and 50c.

The optical unit 1 can be provided to emit the short wavelength light beam 1a and the first and second long wavelength light beams 1b and 1c which are perpendicularly polarized. Here, for example, the short wavelength light beam 1a has a P polarization while the first and second long wavelength light beams 1b and 1c have an S polarization.

The diffractive device 15, as a polarization type diffractive device, may include a polarizing holographic device which diffracts the short wavelength light beam 1a having one polarization and transmits the first and second long wavelength light beams 1b and 1c having another polarization perpendicular to the above polarization.

The polarizing holographic device, as it is well known, if it is a transmission type, diffracts a light beam having a particular polarization and transmits a light beam having a polarization perpendicular to the above polarization without diffracting the light beam.

In the present preferred embodiment, the polarizing holographic device is preferably formed of a blazed type so that the efficiency of diffraction with respect to the first diffraction light beam used as an effective light beam to the short wavelength light beam 1a is improved. Here, the blazed type polarizing holographic device has a structure similar to that of a blazed type non-polarizing holographic device shown in Figure 2 which is described later. The blazed type polarizing holographic device can be formed of an anisotropic optical material having different refractive indices according to polarization.

Alternatively, the diffractive device 15 is formed of a plurality of phase delay areas provided to generate a change in phase only to the short wavelength light beam regardless of the polarization of an incident light beam. The diffractive device 15 may have a structure in which the phase delay areas are periodically repeated to diffract the short wavelength light beam 1a only. Here, the diffractive device 15 preferably is of a blazed type and can improve the optical efficiency of the first diffracted light beam with respect to the short wavelength light beam 1a.

The phase delay areas are preferably provided such that the phase difference between one phase delay area and an adjacent phase delay area with respect to the first and second long wavelength light beams 1b and 1c approximately is an integral multiple of the wavelength $\lambda 1$ of the first long wavelength light beam 1b and the wavelength $\lambda 2$ of the second long wavelength light beam 1c.

That is, assuming that the amounts of phase delay when the first and second long wavelength light beams 1b and 1c pass the one phase delay area of the diffractive device 15 are i and i', and the amounts of phase delay when the first and second long wavelength light beams 1b and 1c pass the other phase delay area of the diffractive device 15 are j and j', the phase difference between the adjacent phase delay areas preferably satisfies the following Equation 3.

$$[\text{Equation 3}]$$

$$(i-j)=g\lambda 1$$

$$(i'-j')=h\lambda 2$$

Here, g and h are numbers within a range of integer$\pm 0.07$, preferably, a range of integer$\pm 0.05$.

In this case, since the first and second long wavelength light beams 1b and 1c can transmit the diffractive device 15 without a phase change, the first and second long wavelength light beams 1b and 1c are not diffracted. In contrast, a phase change is generated at the diffractive device 15 with respect to the short wavelength light beam 1a, and the phase delay areas diffract the short wavelength light beam 1a due to its periodic repetitive structure.

In a detailed preferred embodiment, the diffractive device 15 as a non-polarization type diffractive device, as shown in Figure 2, can have a holographic device in which a pattern having a stepped structure so that the short wavelength light beam 1a can be diffracted is periodically formed at at least one side of a plate type optical medium. Figure 2 shows an example of a blazed type holographic device in which the diffractive device 15 has a 4-step structure. In Figure 2, reference numeral 15a denotes an optical medium portion such as glass used for manufacture of the diffractive device 15, and reference numeral 16 denotes an air portion where the optical medium is removed to form a pattern having a stepped structure. Also, reference letter d denotes the size of a step.

Here, the size of a step of the pattern of the diffractive device 15 is preferably formed to have the size corresponding to approximately an integral multiple of the wavelengths $\lambda 1$ and $\lambda 2$ of the first and second long wavelength light beams 1b and 1c, satisfying the conditions of Equation 3, in which the first and second long wavelength light beams 1b and 1c are transmitted as they are. Here, the step of the pattern corresponds to the above-mentioned phase delay area.

The size d of a step of the pattern of the diffractive device 15 preferably satisfies Equation 4, corresponding to Equation 3.

[Equation 4]

$$(n11-n0')d=g\lambda 1$$

$$(n22-n0'')d=h\lambda 2$$

Here, n11 and n22 are refractive indices of the first and second long wavelength light beams 1b and 1c in an optical medium forming the diffractive device 15 with respect to the wavelengths of λ1 and λ2, respectively. n0' and n0" are refractive indices of the first and second long wavelength light beams 1b and 1c in the air portion with respect to the wavelengths of λ1 and λ2, respectively.

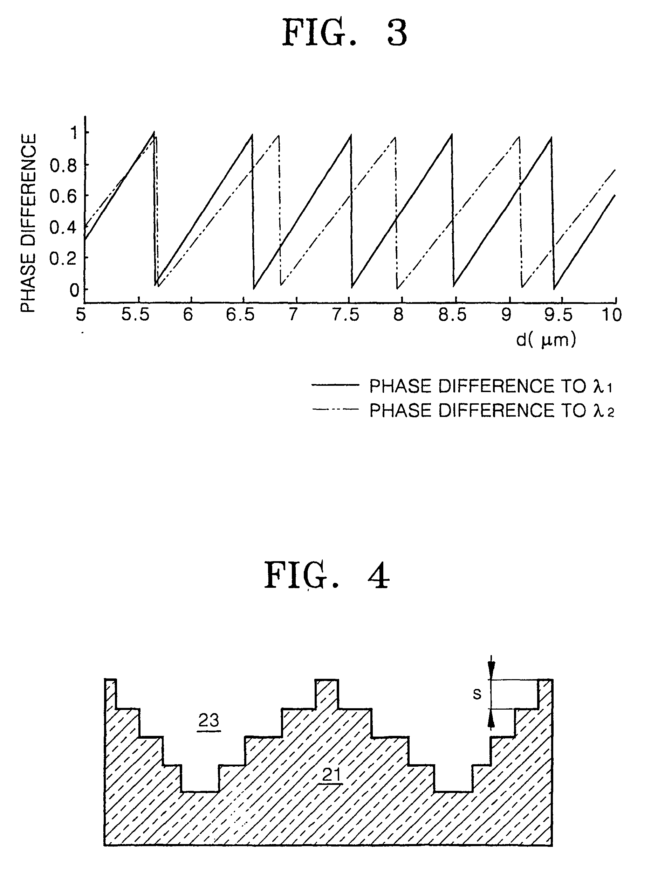

Figure 3 is a graph showing a phase difference between the wavelength λ1 of the first long wavelength light beam 1b and the wavelength λ2 of the second long wavelength light beam 1c according to the size of the step d, when M-LaC130_HOYA is used as an optical medium of the diffractive device 15. The graph of Figure 3 is obtained when the high density optical disc 50a and the first and second low density optical disc 50b and 50c are an HD-DVD, a DVD, and a CD, respectively, the wavelength λ of the short wavelength light beam 1a is 400 nm, and the wavelengths λ1 and λ2 of the first and second long wavelength light beams 1b and 1c are 650 nm and 780 nm, respectively. Here, the refractive indices of M-LaC130_HOYA to the wavelengths of 400 nm, 650 nm, 780 nm are 1.715566, 1.689858, and 1.684657, respectively.

Referring to Figure 3, when a stepped pattern having a step d of 5.66 μm is formed by using M-LaC130_HOYA as an optical medium, a phase difference of 0.007 λ1 close to an integral multiple with respect to the wavelength λ1 of the first long light beam 1b for a DVD, a phase difference of 0.032 λ2 close to an integral multiple with respect to the wavelength λ2 of the second long light beam 1c for a CD, and a phase difference of 0.14 λ with respect to the wavelength λ of the short light beam 1a for an HD-DVD are generated.

Thus, the diffractive device 15 satisfying Equation 4 can be obtained by periodically forming a pattern having a plurality of steps having a step d of 5.66 μm by using M-LaC130_HOYA as an optical medium.

The polarization or non-polarization diffractive device 15, as can be seen from a grating equation, since a diffraction angle of a diffracted light beam of the same order increases as the wavelength of an incident light increases, a focal length is reduced as the wavelength of the incident light increases.

Thus, when the diffractive device 15 is provided, the wavelength of the short wavelength light beam 1a increases so that the focal length of the objective lens 40 increases while the focal length at the diffractive device 15 is reduced. Thus, the increase and decrease in the focal length are offset so that defocus due to the mode hopping during recording and/or reproduction mode switching with respect to the high density optical disc 50a can be reduced.

Also, when the diffractive device 15 is provided, defocus due to the mode hopping during recording and/or reproduction mode switching with respect to the short wavelength light beam 1a can be reduced. The long wavelength light beams 1b and 1c can proceed without being affected by the diffractive device 15.

The divergent lens 17 can be arranged on the optical path between the diffractive device 15 and the objective lens 40. The divergent lens 17 refracts the first and second long wavelength light beams 1b and 1c proceeding toward the objective lens 40 from the optical unit 1 to be incident upon the objective lens 40 as divergent light beams. For example, when the divergent lens 17 is adopted and the second long wavelength light beam 1c is focused by an objective lens having an NA of 0.85 and a working distance of 0.6 mm with respect to the high density optical disc 50a, that is, an HD-DVD, a working distance of 0.23 mm, for example, to the second low density optical disc 50c, that is, a CD, can be obtained. Here, when the objective lens 40 having a working distance of 0.6 mm is used, no problem is generated with respect to a DVD.

When the divergent lens 17 is provided at the entrance pupil side of the objective lens 40, even when the objective lens 40 having a normal working distance (for example, 0.6 mm) is used for an HD-DVD, a sufficient working distance not only for a DVD but also a CD can be obtained. Thus, during recording and/or reproduction of a CD, the objective lens 40 is prevented from colliding against an optical disc.

In the meantime, when no divergent lens 17 is provided, the short wavelength light beam 1a diffracted by the diffractive device 15 is incident on the objective lens 40 as a converging light beam by the diffraction angle. However, when the divergent lens 17 is arranged at the entrance pupil side of the objective lens 40, the short wavelength light beam 1a diffracted by the diffractive device 15 is refracted by the divergent lens 17 to be incident on the objective lens 40 as an approximately parallel beam. This is because, as shown in Figure 1, when the short wavelength light beam 1a incident on the diffractive device 15 is a parallel beam, the divergent lens 17 compensates for the optical power applied to the short wavelength light beam 1a by the diffractive device 15.

In the present invention, the diffractive device 15 and the divergent lens 17 hardly have optical power with respect to the short wavelength light beam 1a for the high density optical disc 50a. For this purpose, the diffractive device 15 and the divergent lens 17 are preferably driven integrally with the objective lens 40. That is, the diffractive device 15 and the divergent lens 17 are preferably installed at a bobbin of an actuator (not shown) where the objective lens 40 is installed.

Preferably, the compatible optical pickup according to the present invention includes a wave plate 19 to improve the efficiency of the short wavelength light beam 1a for the high density optical disc 50a. When the wave plate 19 is arranged between the diffractive device 15 and the objective lens 40, as shown in Figure 1, preferably, the wave plate 19 works as a quarter wave plate with respect to the short wavelength light beam 1a while it works as about half wave plate with respect to the first and second long wavelength light beams 1b and 1c.

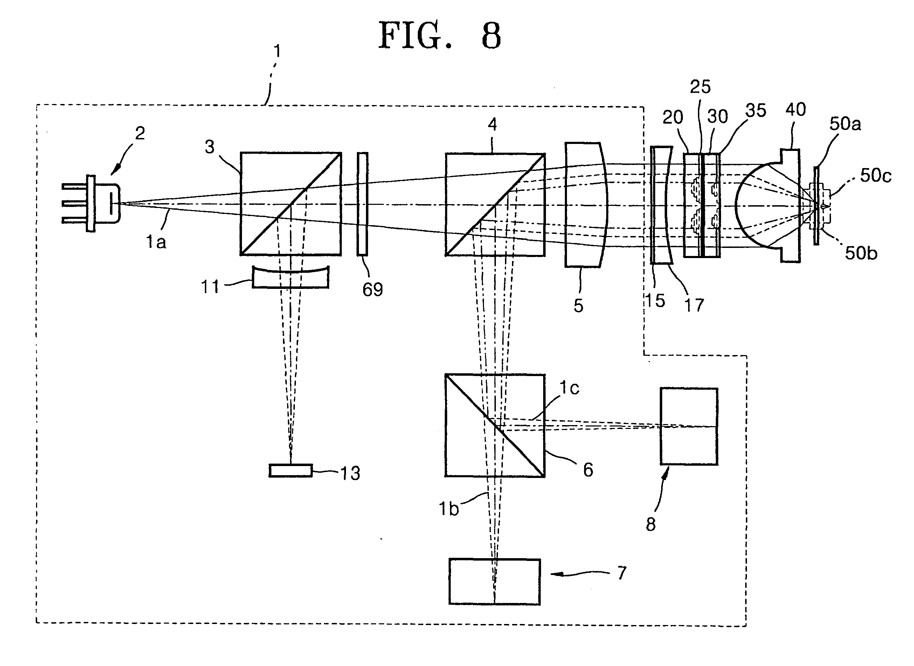

Here, when a polarizing holographic device is provided as the diffractive device 15, the wave plate 19 is preferably arranged between the diffractive device 15 and the objective lens 40, as shown in Figure 1. When the non-polarization diffractive device 15 is provided as the diffractive device 15, as shown in Figure 8 which will be described later, the position of the wave plate (69 of Figure 8) may be changed.

In the meantime, in the case in which the first and second low density optical discs 50b and 50c have thickness different from that of the high density optical disc 50a, when a light spot is formed on the first low density optical disc 50b by focusing the first long wavelength light beam 1b by the objective lens 40, spherical aberration is generated due to a difference in thickness between the high density optical disc 50a and the first low density optical disc 50b. Likewise, when a light spot is formed on the second low density optical disc 50c by focusing the second long wavelength light beam 1c by the objective lens 40, spherical aberration is generated due to a difference in thickness between the high density optical disc 50a and the second low density optical disc 50c. Also, when the first and second long wavelength light beams 1b and 1c are focused by the objective lens 40, chromatism is generated due to a difference in wavelength from the short wavelength light beam 1a.

Thus, when the high density optical disc 50a and the first and second low density optical discs 50b and 50c are compatibly recorded and/or reproduced, the compatible optical pickup according to the present invention preferably provides first and second phase correctors 20 and 30 to correct aberration when the first and second low density optical discs 50b and 50c are adopted.

The first phase corrector 20 corrects spherical and/or chromatism generated to the first long wavelength light beam 1b during recording and/or reproduction of the first low density optical disc 50b. The second corrector 30 corrects spherical and/or chromatism generated to the second long wavelength light beam 1c during recording and/or reproduction of the second low density optical disc 50c.

The first phase corrector 20 has a plurality of phase delay areas provided to generate a change in phase difference only for the first long wavelength light beam 1b to correct aberration generated during recording and/or reproduction of the first low density optical disc 50b. The phase delay areas are preferably provided such that a phase difference between one phase delay area and another phase delay area adjacent thereto with respect to the short wavelength light beam 1a and the second long wavelength light beam 1c is approximately an integral multiple of the wavelength λ of the short wavelength light beam 1a and the wavelength λ2 of the second long wavelength light beam 1c as shown in Equation 5, so that a change in phase difference is generated only to a light beam having a particular wavelength by a principle similar to a case of the non-polarization diffractive device 15 described with reference to Figure 2.

That is, assuming that the amounts of phase delay when the short wavelength light beam 1a and the second long wavelength light beam 1c pass the one phase delay area of the first phase corrector 20 are a and a', and the amounts of phase delay when the short wavelength light beam 1a and the second long wavelength light beam 1c pass the other phase delay area of the first phase corrector 20 are b and b', the phase difference between the adjacent phase delay areas preferably satisfies the Equation 5.

$$[\text{Equation 5}]$$

$$(a-b) = l\lambda$$

$$(a'-b') = m\lambda 2$$

Here, 1 and m are numbers within a range of integer$\pm$0.07, preferably, a range of integer$\pm$0.05.

In this case, since the first phase corrector 20 generates a change in phase with respect to the first long wavelength light beam 1b and transmits the short wavelength light beam 1a and the second long wavelength light beam 1c without the phase change.

Similarly, the second phase corrector 30 has a plurality of phase delay areas provided to generate a change in phase difference only for the second long wavelength light beam 1c to correct aberration generated during recording and/or reproduction of the second low density optical disc 50c. The phase delay areas are preferably provided such that a phase difference between one phase delay area and another phase delay area adjacent thereto with respect to the short wavelength light beam 1a and the first long wavelength light beam 1b is approximately an integral multiple of the wavelength λ of the short wavelength light beam 1a and the wavelength λ1 of the first long wavelength light beam 1b. That is, assuming that the amounts of phase delay when the short wavelength light beam 1a and the first long wavelength light beam 1b pass the one phase delay area of the second phase corrector 30 are c and c', and the amounts of phase delay when the short wavelength light beam 1a and the first long wavelength light beam 1b pass the other phase delay area of the second phase corrector 30 are d and d', the phase difference between the adjacent phase delay areas preferably satisfies the Equation 6.

$$[\text{Equation 6}]$$

$$(c-d) = p\lambda$$

$$(c'-d') = q\lambda 1$$

Here, p and q are numbers within a range of integer±0.07, preferably, a range of integer±0.05.

In this case, since the second phase corrector 30 generates a change in phase with respect to the second long wavelength light beam 1c and transmits the short wavelength light beam 1a and the first long wavelength light beam 1b without the phase change.

The first and second phase correctors 20 and 30, as shown in Figure 4, may have a structure in which a pattern having a step is formed in at least one side of a plate type optical medium to generate a change in phase difference to correct aberration generated during adopting the first and second low density optical discs 50b and 50c. In Figure 4, reference 21 denotes an optical medium portion such as glass used to manufacture the first and second phase correctors 20 and 30, reference numeral 23 denotes an air portion where the optical medium is removed by forming a pattern having a step, and reference letter s denotes the size of a step.

Here, the size of a step of a pattern of each of the first and second phase correctors 20 and 30, to satisfy the conditions of Equations 5 and 6, is preferably formed to approximately correspond to an integral multiple of the two wavelengths such that the first and second phase correctors 20 and 30 work to generate a change in phase difference only to a light beam having one wavelength and transmit light beams having the other two wavelengths nearly as they are. Here, each step of the patterns correspond to the above phase delay area.

That is, the size s1 of a step of a pattern of the first phase corrector 20 preferably satisfies Equation 7 corresponding to Equation 5.

$$[\text{Equation 7}]$$

$$(n-n0) s1 = l\lambda$$

$$(n2-n0'') s1 = m\lambda 2$$

Here, n and n2 are refractive indices of the short wavelength light beam 1a and the second long wavelength light beams 1c in an optical medium forming the first phase corrector 20 with respect to the wavelengths of λ and λ2, respectively. n0 and n0" are refractive indices of the short wavelength light beam 1a and the second long wavelength light beams 1c in the air portion with respect to the wavelengths of λ and λ2, respectively.

Also, the size s2 of a step of a pattern of the second phase corrector 30 preferably satisfies Equation 8 corresponding to Equation 6.

[Equation 8]

$$(n'-n0)s2=p\lambda$$

$$(n1'-n0')s2=q\lambda1$$

Here, n' and n1' are refractive indices of the short wavelength light beam 1a and the first long wavelength light beams 1b in an optical medium forming the second phase corrector 30 with respect to the wavelengths of $\lambda$ and $\lambda1$, respectively. n0 and n0' are refractive indices of the short wavelength light beam 1a and the first long wavelength light beams 1b in the air portion with respect to the wavelengths of $\lambda$ and $\lambda1$, respectively.

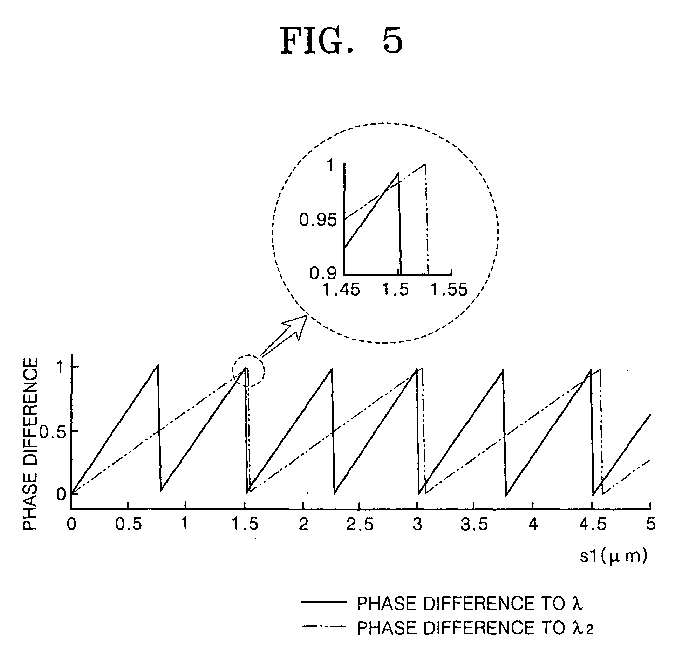

Figure 5 is a graph showing a phase difference between the wavelength $\lambda$ of the short wavelength light beam 1a for an HD-DVD and the wavelength $\lambda2$ of the second long wavelength light beam 1c for a CD according to the size of the step s1, when BK7 is used as an optical medium of the first phase corrector 20. The graph of Figure 5 is obtained when the high density optical disc 50a and the first and second low density optical disc 50b and 50c are an HD-DVD, a DVD, and a CD, respectively, the wavelength $\lambda$ of the short wavelength light beam 1a is 400 nm, and the wavelengths $\lambda1$ and $\lambda2$ of the first and second long wavelength light beams 1b and 1c are 650 nm and 780 nm, respectively. Here, the refractive indices of BK7 which is glass to the wavelengths of 400 nm, 650 nm, 780 nm are 1.530849, 1.514520, and 1.511183, respectively.

Referring to Figure 5, when a pattern having a step s1 of 1.5 $\mu$m is formed by using BK7 as an optical medium, a phase difference of 0.99 $\lambda$ close to an integral multiple with respect to the wavelength $\lambda$ of the short light beam 1a for an HD-DVD, a phase difference of 0.98 $\lambda2$ close to an integral multiple with respect to the wavelength $\lambda2$ of the second long light beam 1c for a CD, and a phase difference of 0.20 $\lambda1$ with respect to the wavelength $\lambda1$ of the first long wavelength light beam 1b for a DVD are generated. Here, the size of a step of the pattern formed in the phase corrector being an integral multiple with respect to a light beam having a predetermined wavelength means that, when the light beam having a predetermined wavelength passes the phase corrector, a change is not generated in phase difference according to the shape of a pattern.

Thus, the first phase corrector 20 satisfying Equations 5 and 7 can be obtained by forming a pattern having a step s1 of 1.5 $\mu$m by using BK7 as an optical medium.

Also, when a pattern having a stepped structure satisfying the conditions of Equation 8 is formed in a predetermined optical medium like the first phase corrector 20, the second phase corrector 30 can be obtained which transmits the short wavelength light beam 1a and the first long wavelength light beam 1b nearly as they are and generates a change in phase difference only for the second long wavelength light beam 1c. A preferred embodiment of the second phase corrector 30 will be described later in detail.

When a pattern having a step of s1 satisfying Equation 7 is formed in the first phase corrector 20, the short wavelength light beam 1a and the second long wavelength light beam 1c pass through the first phase corrector 20 nearly as they are, but a change in phase difference according to the shape of the pattern is generated in the first long wavelength light 1b as it passes through the first phase corrector 20. Also, when a pattern having a step of s2 satisfying Equation 8 is formed in the second phase corrector 30, the short wavelength light beam 1a and the first long light beam 1b pass through the second phase corrector 30 nearly as they are, but a change in phase difference according to the shape of the pattern is generated in the second long wavelength light 1c as it passes through the second phase corrector 30.

Thus, a compatible optical pickup having two kinds of phase correctors, that is, the first and second phase correctors 20 and 30, which are manufactured to have a step of a pattern to be an integral multiple of two wavelengths and generate a change in phase difference in only one wavelength, can sufficiently reduce generation of aberration when three types of optical discs 50a, 50b, and 50c having different thickness are compatibly adopted.

Referring back to Figure 1, the optical pickup preferably further includes a first aperture filter 25 for changing an effective NA of the objective lens 40 with respect to the first long wavelength light beam 1b and a second aperture filter 35 for changing an effective NA of the objective lens 40 with respect to the second long wavelength light beam 1c.

The first and second aperture filters 25 and 35 are preferably wavelength selective coating members or holographic diffractive members which can change an effective NA of the objective lens 40 by selectively preventing proceeding of a light beam incident on outer ring portions 25a and 35a according to the wavelength thereof while allowing a light beam incident on a central portion thereof to proceed substantially unchanged.

The first and second aperture filters 25 and 35 can be formed such that the inside of the ring portions 25a and 35a are open, as shown in Figure 1, and are preferably formed integrally with the first and second phase correctors 20 and 30, respectively.

The ring portion 25a of the first aperture filter 25 blocks only the first long wavelength light beam 1b and transmits the short wavelength light beam 1a and the second long wavelength light beam 1c as they are. Here, the inner diameter of the ring portion 25a of the first aperture filter 25 is preferably formed to have a size enough to obtain an effective NA of the objective lens 40 suitable for recording and/or reproduction of the first low density optical disc 50b. For example, when the first low density optical disc 50b is a DVD, the inner diameter of the ring portion 25a of the first aperture filter 25 is preferably formed to have a size enough to obtain an effective NA of 0.6 of the objective lens 40.

The ring portion 35a of the second aperture filter 35 blocks only the second long wavelength light beam 1c and transmits the short wavelength light beam 1a and the first long wavelength light beam 1b as they are. Here, the inner diameter of the ring portion 35a of the second aperture filter 35 is preferably formed to have a size to obtain an effective NA of the objective lens 40 suitable for recording and/or reproduction of the second low density optical disc 50c. For example, when the second low density optical disc 50c is a CD, the inner diameter of the ring portion 35a of the second aperture filter 35 is preferably formed to have a size small enough to obtain an effective NA of 0.45 of the objective lens 40.

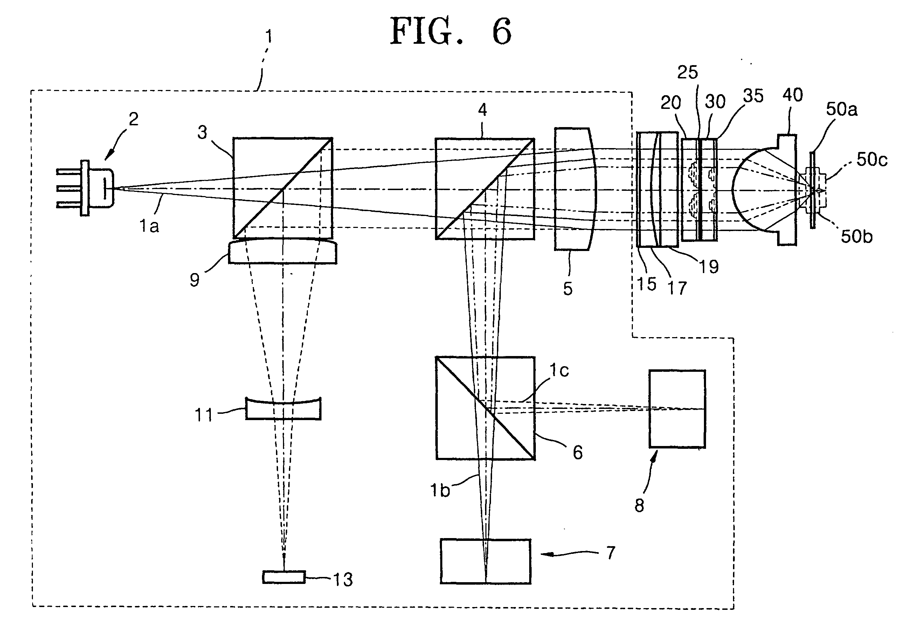

In the meantime, Figure 6 shows an optical configuration of a compatible optical pickup according to a preferred embodiment of the present invention. Referring to Figure 6, the optical unit lincludes a first light source 2 for emitting the short wavelength light beam 1a having a wavelength λ suitable for recording and/or reproduction of the high density optical disc 50a, a first photodetector 13 for receiving and detecting the light beam reflected by the high density optical disc 50a, first and second optical modules 7 and 8 for emitting the first and second long wavelength light beams 1b and 1c having wavelengths λ1 and λ2 suitable for recording and/or reproduction of the first and second low density optical discs 50b and 50c, and first through third optical path changers 3, 6, and 4 for changing proceeding paths of the short wavelength light beam 1a and the first and second long wavelength light beams 1b and 1c respectively emitted from the first light source 2 and first and second optical modules 7 and 8.

When an HD-DVD is adopted in the high density optical disc 50a, a blue-violet semiconductor laser emitting the short wavelength light beam 1a having a wavelength of, for example, 400 nm, can be provided as the first light source 2.

The first optical module 7 has a structure in which a light source for emitting the first long wavelength light beam 1b and a photodetector for receiving the first long wavelength light beam 1b reflected by the first low density optical disc 50b are incorporated together. Likewise, the second optical module 8 has a structure in which a light source for emitting the second long wavelength light beam 1c and a photodetector for receiving the second long wavelength light beam 1c reflected by the second low density optical disc 50c are incorporated together. When the first and second low density optical discs 50b and 50c are a DVD and a CD, a red semiconductor laser emitting the first long wavelength light beam 1b having a wavelength of, for example, 650 nm, and an infrared semiconductor laser emitting the second long wavelength light beam 1c having a wavelength of, for example, 780 nm, can be provided as light sources in the first and second optical modules 7 and 8, respectively.

Here, since the structure of the first and second optical modules 7 and 8 are well known in the field relating to the present technology, a detailed description and illustration will be omitted herein.

The compatible optical pickup shown in Figure 6 has an optical configuration suitable for a case in which a polarizing holographic device is provided as the diffractive device 15. Preferably, the first light source 2 emits the short wavelength light beam 1a of, for example, a P polarization, and the first and second optical modules 7 and 8 emit the first and second long wavelength light beams 1b and 1c of, for example, an S polarization.

A polarized beam splitter is preferably provided as the first optical path changer 3 to improve the efficiency of light with respect to the short wavelength light beam 1a. A beam splitter having transmittance and reflectance to the S polarization in the ratio of 50:50, for example, to transmit and reflect the first and second long wavelength light beams 1b and 1c emitted from the first and second optical modules 7 and 8 in a similar ratio, can be provided as the second optical path changer 10. A beam splitter having a transmittance of 90% or more to the short wavelength light beam 1a and a reflectance of 90% or more to the S polarization with respect to the first and second long wavelength light beams 1b and 1c, for example, can be provides as the third optical path changer 4.

In the meantime, a collimating lens 5 for focusing the short wavelength light 1a and the first and second long wavelength light beams 1b and 1c emitted from the first light source 2 and the first and second optical modules 7 and 8 and approximately converting them into parallel beams, is preferably provided on the optical path between the third optical path changer 4 and the objective lens 40.

When a polarizing holographic device is provided as the diffractive device 15, the wave plate 19, as shown in Figure 6, is preferably arranged between the diffractive device 15 and the objective lens 40. In the present preferred embodiment, the wave plate 19, as previously described, works as a quarter wave plate with respect to the short wavelength light beam 1a and a half wave plate with respect to the first and second long wavelength light beams 1b and 1c.

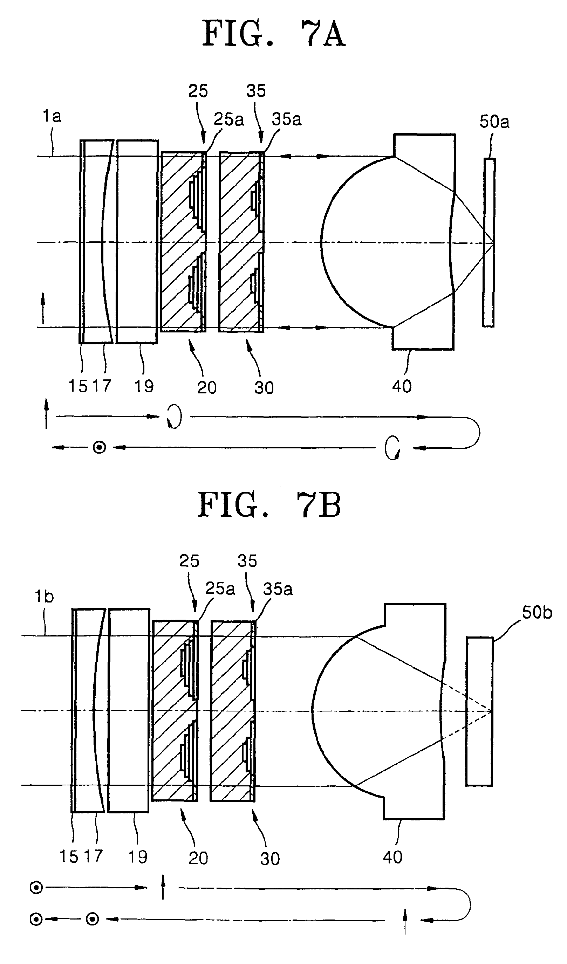

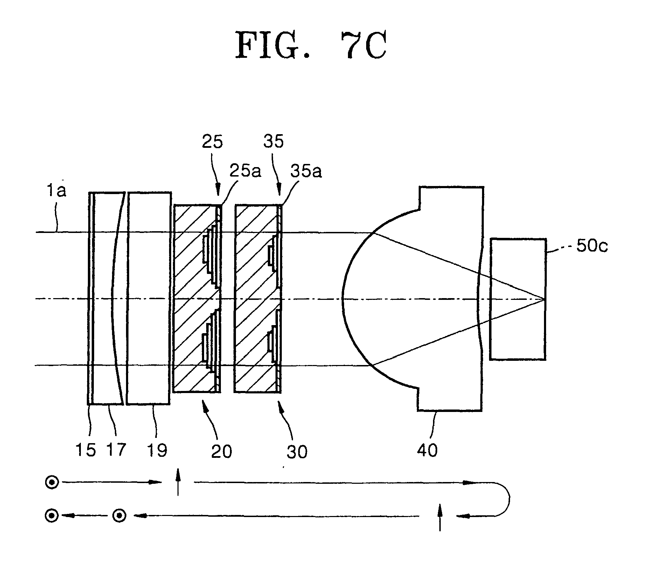

In this case, as shown in Figure 7A in which a change in polarization of the short wavelength light beam 1a is shown, the short wavelength light beam 1a having a P polarization when it comes from the optical unit 1 is diffracted by the polarizing holographic device, whereas, when the short wavelength light beam 1a is input after being reflected by the high density optical disc 50a, it has an S polarization and is not diffracted by the polarizing holographic device. Also, as shown in Figures 7B and 7C in which changes in polarization of the first and second long wavelength light beams 1b and 1c are shown, since the first and second long wavelength light beams 1b and 1c have S polarization in both cases in which it comes from the optical unit 1 and it is input after being reflected by the first and second low density optical discs 50b and 50c, they are not diffracted by the polarizing holographic device.

In the meantime, as shown in Figure 6, since the short wavelength light beam 1a reflected by the high density optical disc 50a and passing through the diffractive device 15 is not diffracted by the diffractive device 15, the short wavelength light beam 1a proceeding back toward the collimating lens 5 becomes a divergent beam. The divergent beam is approximately converted to a parallel beam by the collimating lens 5 and proceeds toward the first photodetector 13 via the third and first optical path changers 4 and 3. Here, since the short wavelength light beam 1a proceeding toward the first photodetector 13 is in form of nearly a parallel beam, a condensing lens 9 for condensing the parallel beam is preferably provided between the first optical path changer 3 and the first photodetector 13. Also, a sensing lens 11 is preferably provided between the condensing lens 9 and the first photodetector 13. The sensing lens 11, as it is well known in the field of the present technology, is adjusted along the optical axis to match the zero position of an S-curve of a focus error signal and the position of an information surface of the high density optical disc 50a.

Figure 8 shows an optical configuration of a compatible optical pickup according to another preferred embodiment of the present invention. Since the same reference numerals as those in Figure 6 indicate the same elements having the same or similar functions, detailed descriptions thereof will be omitted herein.

Referring to Figure 8, a compatible optical pickup according to another preferred embodiment of the present invention includes the diffractive device 15 (descried with reference to Figures 4 and 5) capable of selectively diffracting a light beam having a particular wavelength regardless of polarization. In this case, unlike the case shown in Figure 6, a wave plate 69 needs not be arranged between the diffractive device 15 and the objective lens 40. Figure 8 shows an example in which a polarized beam splitter is provided as the first optical path changer 3 and the wave plate 69 is provided between the first and third optical path changers 3 and 4, to improve the efficiency of light with respect to the short wavelength light beam 1a. Here, the wave plate 69 is preferably a quarter wave plate with respect to the short wavelength light beam 1a.

In the meantime, when the diffractive device 15 capable of selectively diffracting only a light beam having a particular wavelength regardless of polarization is provided, the short wavelength light beam 1a reflected by the high density optical disc 50a is diffracted as it passes through the diffractive device 15. Thus, the short wavelength light beam 1a reflected by the high density optical disc 50a proceeds back along the same optical path as that along which it is emitted from the optical unit 1, and proceeds toward the first photodetector 13 in form of a convergent beam. Thus, unlike the case shown in Figure 6, the condensing lens does not need to be provided between the first optical path changer 3 and the first photodetector 13.

Figures 6 and 8 show examples of the preferred optical structure of the compatible optical pickup according to the present invention, but the invention is also applicable to a variety of other optical structures.

Additionally, although Figures 6 and 8 show examples in which cubic beam splitter type optical path changers are provided, the present invention is not limited thereto and a variety of modifications to the first through third optical path changers 3, 10, and 4 are available.

The proceeding process of a light beam in the compatible optical pickup according to the present invention will now be described based on the optical configuration shown in Figure 6.

First, when the high density optical disc 50a is adopted, the short wavelength light beam 1a of a P polarization emitted from the first light source 2 sequentially passes through the first and third optical path changers 3 and 4 and is converted to a parallel beam by the collimating lens 5 and is output from the optical unit 1. The P polarized short wavelength light beam 1a emitted from the optical unit 1 is diffracted by the diffractive device 15, is converted to a nearly parallel beam by the divergent lens 17, is changed to a circular polarization by the wave plate 19, and proceeds toward the first and second phase correctors 20 and 30. The short wavelength light beam 1a passes the first and second phase correctors 20 and 30 and the first and second aperture filters 25 and 35, as it is, is focused by the objective lens 40, and is formed as a light spot on a recording surface of the high density optical disc 50a. The short wavelength light beam 1a which has another orthogonal circular polarization as being reflected by the high density optical disc 50a sequentially passes the objective lens 50a and the first and second phase correctors 20 and 30 and then the polarization is changed to an S polarization as it passes through the wave plate 19. The S polarized short wavelength light beam 1a is incident on the divergent lens 17 and changed to a divergent beam thereby, and passes through the diffractive device 15, as it is, to be incident on the optical unit 1. The short wavelength light beam 1a input to the optical unit 1 is in form of a nearly parallel beam by the collimating lens 5 and passes through the third optical path changer 4 to be input to the first optical path changer. The short wavelength light beam 1a is reflected by the first optical path changer 3 and is incident on the condensing lens 9, and then is focused by the condensing lens 9 and the sensing lens 11 to be received by the first photodetector 13.

When the first low density optical disc 50b is adopted, the first long wavelength light beam 1b having an S polarization emitted from the first optical module 7 passes through the second optical path changer 6 and is incident on the third optical path changer 4. The first long wavelength light beam 1b is reflected by the third optical path changer 4 and is incident on the collimating lens 5, and is changed to a nearly parallel beam by the collimating lens 5. The S polarized first long wavelength light beam 1b passes through the diffractive device 15, as it is, and is changed to a divergent beam by the divergent lens 17. The S polarized first long wavelength light beam 1b passes through the wave plate 19, is approximately changed to a light beam having a P polarization as it passes through the wave plate 19, and is incident on the first phase corrector 20. A change in phase difference is generated to the first long wavelength light beam 1b so that the first phase corrector 20 can correct spherical aberration and/or chromatism, and the first long wavelength light beam 1b is incident on the first aperture filter 25. The first long wavelength light beam 1b is partially blocked by the first aperture filter 25 and part thereof proceeding toward the inner side of the ring portion 25a only passes through the first aperture filter 25, to have a size such that an effective NA, for example, 0.6, suitable for recording and/or reproduction of the first low density optical disc 50b is obtained. The first long wavelength light beam 1b passes through the second phase corrector 30 and the second aperture filter 35, as it is, to be incident on the objective lens 40, and forms a light spot on the recording surface of the first low density optical disc 50b by being focused by the objective lens 40. The first long wavelength light beam 1b reflected by the first low density optical disc 50b is converted to an S polarization beam while passing through the wave plate 19 and proceeds back to the first optical module 7 along the opposite path.

When the second low density optical disc 50c is adopted, the second long wavelength light beam 1c having an S polarization emitted from the second optical module 8 is sequentially reflected by the second and third optical path changers 6 and 4 and is converted to a nearly parallel beam by the collimating lens 5. The S polarized second long wavelength light beam 1c passes through the diffractive device 15, as it is, and is changed to a divergent beam by the divergent lens 17. The S polarized second long wavelength light beam 1c is approximately changed to the P polarized light beam as it passes through the wave plate 19 and is incident on the first phase corrector 20. The second long wavelength light beam 1c passes through the first phase corrector 20 and the first aperture filter 25, as it is, and is incident on the second phase corrector 30. A change in phase difference is generated to the second long wavelength light beam 1c so that the second phase corrector 30 can correct spherical aberration and/or chromatism. Part of the second long wavelength light beam 1c is blocked by the second aperture filter 35. Part of the second long wavelength light beam 1c proceeding toward the inside of the ring portion 35a passes through the second aperture filter 35 and has a size enough to obtain an effective NA, for example, an NA of 0.45, suitable for recording and/or reproduction of the second low density optical disc 50c. The second long wavelength light beam 1c is focused by the objective lens 40 so that a light spot is formed on the recording surface of the second low density optical disc 50c. The second long wavelength light beam 1c having a P polarization reflected by the second low density optical disc 50c is changed to have an S polarization as it passing through the wave plate 19, and proceeds back to the second optical module 8 along the opposite path.

An optical design of a compatible optical pickup according to a particularly preferred embodiment of the present invention will now be described.

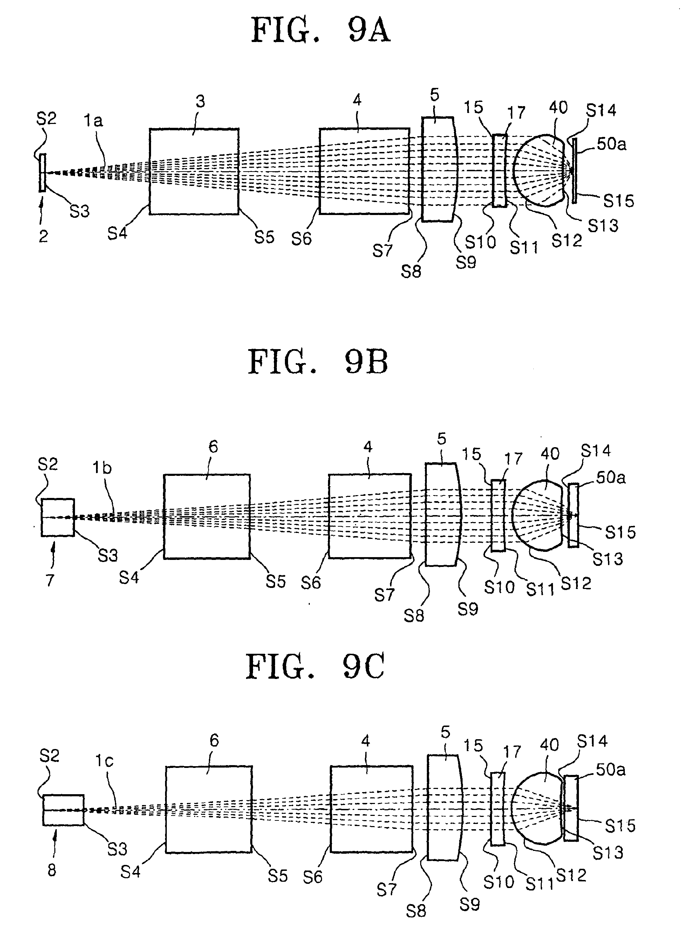

Figures 9A through 9C show optical paths of the short wavelength light beam 1a and first and second long wavelength light beams 1b and 1c when the compatible optical pickups shown in Figures 6 and 8 is separated into an optical system contributing to recording and/or reproduction of an HD-DVD, a DVD, and a CD. Table 2 shows a design example by which the optical paths of Figures 9a through 9C can be obtained. In Table 2, the short wavelength light beam 1a and the first and second long wavelength light beams 1b and 1c are 400 nm, 650 nm, and 870 nm, respectively.

[Table 2]

| surface | Radius of Curvature (mm) | Thickness/ Interval (mm) | Material (Glass) |
|---|---|---|---|
| Surface of Object | INFINITY | INFINITY | |
| S1 | INFINITY | 0.000000 | |
| S2 | INFINITY | 0.250000 2.000000 2.500000 | BK7_HOYA |
| S3 | INFINITY | 6.163560 5.56580 5.35287 | |
| S4 | INFINITY | 5.000000 | BK7 HOYA |
| S5 | INFINITY | 5.000000 | |
| S6 | INFINITY | 5.000000 | BK7-HOYA |

(continued)

| surface | Radius of Curvature (mm) | Thickness/ Interval (mm) | Material (Glass) |
|---|---|---|---|
| S7 | INFINITY | 1.000000 | |
| S8 | 133.350456 | 2.000000 | M-BaCD5N_HOYA |
| | K:-307.351031 | | |
| S9 | -13.236664 | 2.000000 | |
| | K:-0.453871 | | |
| S10 | INFINITY HOE | 0.700000 | M-BaCD5N_HOYA |
| | C1:-1.9676E-02 | | |
| S11 | 15.073272 | 0.500000 | |
| S12 (STOP) | 1.716498 | 2.850000 | M-LaC130_HOYA |
| | K:-0.631379<br>A:0.599226E-02 B:0.113447E-02 C:0.136628E-03 D:0.320343E-04<br>E:0.779174E-05 F:-.316106E-05 G:0.885052E-07 H:0.308966E-06<br>J:-.747648E-07 | | |
| S13 | -10.695842 | 0.641810<br>0.61492<br>0.26732 | |
| | K:-159.109260<br>A:0.208702E+00 B:-.240069+00 C:0.129315E+00 D:-.284858E-01 | | |
| S14 | INFINITY | 0.100000<br>0.60000<br>1.20000 | 'CG' |
| S15 | INFINITY | 0.00000 | |
| Image Surface | INFINITY | 0.00000 | |

In Table 2, the thickness/interval data of the surfaces S2, S3, S13, and S14 correspond to an HD-DVD, a DVD, and a CD, respectively, from the above. The thickness between the surface S2 and S3 is a thickness of a window with respective to the first light source 2 for 400 nm and a thickness of a transparent member with respect to the first and second optical modules 7 and 8 for 650 nm and 780 nm.

In Table 2, K denotes a conic constant of the aspheric surfaces S2 and S3 and A, B, C, D, E, F, G, H, and J denote aspheric coefficients. When the depth from the apex of an aspherical surface is z, an equation to the aspherical surfaces S2 and S3 can be expressed by Equation 5.

[Equation 5]

$$z = \frac{ch^2}{1 + \sqrt{1 - (1+K)c^2h^2}} + Ah^4 + Bh^6 + Ch^8 + Dh^{10} + Eh^{12} + Fh^{14} + Gh^{16} + Hh^{18} + Jh^{20}$$

Here, h denotes a height from the optical axis, c denotes a curvature, and A - J denote aspheric coefficients.

In Table 2, the surface S10 denotes a diffractive surface of the diffractive device (the holographic device) 15 and C1 denotes a coefficient indicating power. A phase coefficient of the holographic device can be expressed by Equation 6 in form of rotationally symmetric form.

[Equation 6]

$$\phi = \frac{2\pi}{\lambda_0} \sum_n C_n r^{2n}$$

Here, $\phi$, $C_n$, and r denote a phase difference, a coefficient, and polar coordinate, respectively.

[Table 3]

| Wavelength | | 400 nm | 650 nm | 780 nm |
|---|---|---|---|---|
| Refractive index | BK7_HOYA | 1.530196 | 1.514520 | 1.511183 |
| | M-BaCD5N_HOYA | 1.605183 | 1.586417 | 1.582468 |
| | M-LaC130_HOYA | 1.715566 | 1.689858 | 1.684657 |
| | 'CG' | 1.621462 | 1.581922 | 1.575091 |
| Diameter of Entrance Pupil | | 3.886 | 2.8 | 2.1 |

Table 3 shows refractive indices of BK7_HOYA, M-BaCD5N_HOYA, and M-LaC130_HOYA, which are formed of a glass material used as an optical medium, and 'CG' which is an optical medium of optical disc, with respect to wavelengths of 400 nm, 650 nm, and 780 nm, in the design example of Table 2, and the diameter of entrance pupil of the short wavelength light beam 1a having a wavelength of 400 nm, the first long wavelength light beam 1b having a wavelength of 650 nm, and the second long wavelength light beam 1c having a wavelength of 780 nm, which are incident on the objective lens 40 in Figures 9A through 9C.

In the case of the optical data of Table 2 and Table 3, as can be seen from Figure 9A, a working distance of about 0.6 mm can be obtained with respect to an HD-DVD having a thickness of 0.1 mm. As can be seen from Figure 9B, a working distance of about 0.57 mm can be obtained with respect to a DVD having a thickness of 0.6 mm. Also, as can be seen from Figure 9C, a working distance of about 0.23 mm can be obtained with respect to a CD having a thickness of 1.2 mm. Here, in Figures 9A through 9C, the working distances of 0.6 mm, 0.57 mm, and 0.23 mm of the objective lens 40 with respect to the HD-DVD, DVD, and CD are obtained by subtracting 0.04 mm due to the shape of the objective lens from the working distances of 0.641810 mm, 0.61492 mm, and 0.26732 mm of the objective lens 40 with respect to the HD-DVD, DVD, and CD shown in Table 2.

Thus, as can be seen from the detailed preferred embodiment shown in Table 2, Table 3, and Figures 9A through 9C, since the compatible optical pickup according to the present invention can increase a working distance by the divergent lens 17 with respect to the first and second long wavelength light beams 1b and 1c, even when the objective lens 40 designed to have a short working distance not more than 0.7 mm with respect to the high density optical disc 50a is adopted, a working distance sufficient to prevent collision between the objective lens 40 and the second low density optical disc 50c can be secured when the second low density optical disc 50c having a thickness greater than the high density optical disc 50a is adopted.

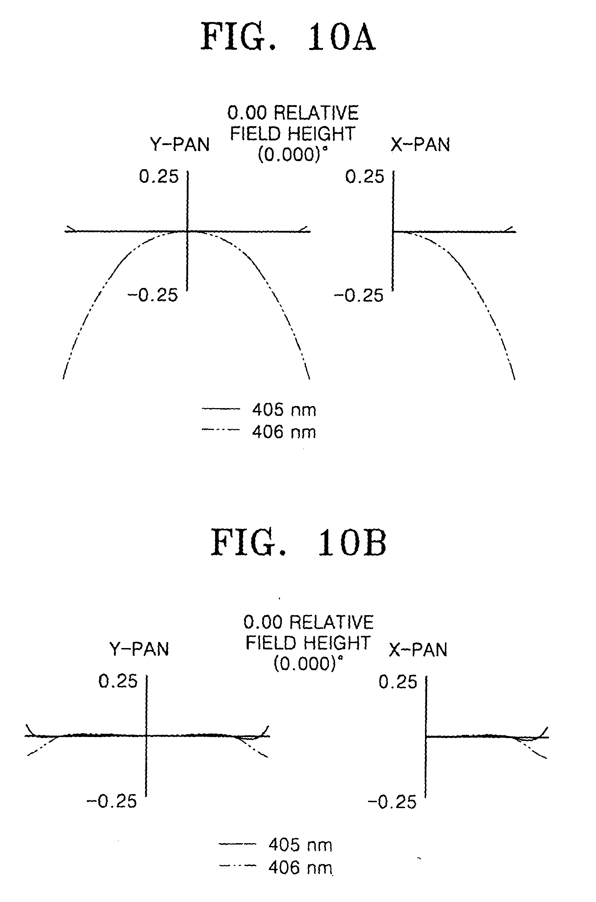

Also, when the compatible optical pickup according to the present invention has the optical data such as the preferred embodiment described with reference to Table 2, Table 3, and Figures 9A through 9C, and has the diffractive device 15, aberration to a change in wavelength of the short wavelength light beam 1a can be remarkably reduced as can be seen from Table 4 and Figures 10A and 10B.

Table 4 shows the amounts of aberration and defocus by the objective lens 40 itself in a normal state in which there is no change in wavelength, the amounts of aberration and defocus by the objective lens 40 itself when the wavelength increases by 1 nm by a mode hopping (OL only), and the amounts of aberration and defocus when the first light source (LD: 2), the collimating lens (CL: 5), the diffractive device (diffractive surface: 15), and the objective lens (OL: 40) are all applied as in the compatible optical pickup according to the present invention (LD+CL+diffractive surface+OL). When the wavelength increases by 1 nm by the mode hopping, Figure 10A shows chromatism by the objective lens 40 itself, Figure 10B shows chromatism in the case in which the first light source 2, the collimating lens 5, the diffractive device 15, and the objective lens 40 are all applied.

[Table 4]

| Change | OL only | LD+CL+ "diffractive surface" +OL |
|---|---|---|
| Chromatism (Normal) | 0.0013λ | 0.0060 λ |
| Chromatism (Mode Hopping+1 nm) (Defocus) | 0.1657λ (510 nm) | 0.0353λ (103 nm) |

As can be seen from Table 4 and Figures 10A and 10B, in the compatible optical pickup according to the present invention, when the diffractive device 15 is provided, it can be seen that the amounts of aberration and defocus are remarkably reduced during a change in wavelength according to mode hopping. In Table 4, the amount of aberration with respect to the "LD+CL+diffractive surface+OL" during the mode hopping is 0.0353λ. Considering a typical aberration allowance is 0.035λ, the amount of aberration of about 0.0353λ is acceptable.

Table 4 indicate the amounts of aberration and defocus for a case in which all of the first light source (LD: 2), the collimating lens (CL: 5), the diffractive device (diffractive surface: 15), and the objective lens (OL: 40) are applied (LD+CL+diffractive surface+OL), considering actual conditions for use.

Here, the amounts of aberration and defocus during coupling of the "diffractive surface+OL" are reviewed below to see a change in aberration and defocus when the diffractive device 15 is provided in the present invention. In the case of the "diffractive surface+OL" aberration in the normal state is 0.00651λ and the amounts of aberration and defocus when the wavelength is increased by 1 nm due to the hopping mode are 0.02171λ and 56 nm, respectively.

Referring to Table 5, when an HD-DVD, a DVD, and a CD are adopted, focal lengths of the objective lens having design data of Table 2 with respect to the short wavelength light beam 1a and the first and second long wavelength light beams 1b and 1c are about 2.286 mm, 2.359 mm, and 2.375 mm, respectively, and effective diameters (NA) of the objective lens 40 with respect to the short wavelength light beam 1a and the first and second long wavelength light beams 1b and 1c are about 3.9 mm (NA=0.85), 2.8 mm (NA=0.60), and 2.1 mm (NA=0.45).

[Table 5]

| | HD-DVD | DVD | CD |
|---|---|---|---|
| Wavelength | 400 nm (λ1) | 650 nm (λ2) | 780 nm (λ3) |
| Thickness of Optical Disc | 0.1 mm | 0.6 mm | 1.2 mm |
| Focal Length of Objective Lens | 2.286 | 2.359 | 2.375 |
| Effective Diameter of Objective Lens (NA) | 3.9 mm (0.85) | 2.8 mm (0.60) | 2.1 mm (0.45) |
| OPDrms | 0.00λ | 0.30λ1 | 0.18λ2 |

In the size of aberration (OPDrms) generated when the objective lens 40 manufactured with the design data of Table 2 is compatibly used for a DVD and a CD, as shown in Table 5, aberration is hardly generated when the objective lens 40 forms a light spot on the HD-DVD 50a having a thickness of 0.1 mm by focusing the short wavelength light beam 1a having a wavelength of 400 nm. In contrast, when the objective lens 40 forms a light spot on the DVD 50b having a thickness of 0.6 mm by focusing the first long wavelength light beam 1b having a wavelength of 650 nm, aberration of 0.30 λ1 is generated. When the objective lens 40 forms a light spot on the CD 50c having a thickness of 1.2 mm by focusing the second long wavelength light beam 1c having a wavelength of 780 nm, aberration of 0.18 λ2 is generated. That is, when the objective lens 40 is compatibly used for a DVD and a CD, spherical aberration is partly corrected by a divergent beam due to the operation of the divergent lens 17, however, aberration far exceeding a value of 0.0351λ that is typically admitted as an allowable aberration value, is still generated in the optical pickup.

However, when the first and second phase correctors 20 and 30 are arranged at the side of entrance pupil of the objective lens 40, aberration generated during the compatible use of a DVD and a CD can be remarkably reduced as described later.

Detailed preferred embodiments of the first and second phase correctors 20 and 30 to be capable of being applied to the compatible optical pickup according to the present invention, and the effect of remarkably reducing aberration generated during compatible use of a DVD and a CD by using the first and second phase correctors 20 and 30, will not be described below. The detailed preferred embodiments of the first and second phase correctors 20 and 30 are described for the case in which the wavelengths λ, λ1, and λ2 of the short wavelength light beam 1a and the first and second long wavelength light beams 1b and 1c are 400 nm, 650 nm, and 780 nm, respectively.

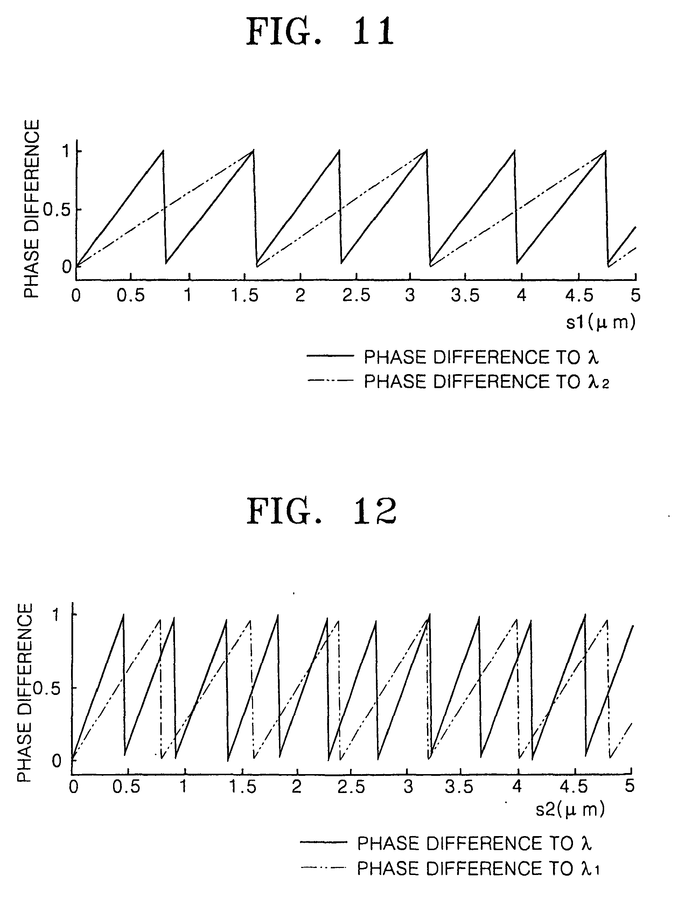

Table 6 shows detailed preferred embodiments of the first and second phase correctors 20 and 30 and remaining aberration when the first and second phase correctors 20 and 30 are used. Figure 11 is a graph showing a phase difference with respect to the wavelength λ of the short wavelength light beam 1a for an HD-DVD and the wavelength λ2 of the second long wavelength light beam 1c for a CD, according to the size of a step s1, when FCD1 is used as an optical medium of the first phase corrector 20. Figure 12 is a graph showing a phase difference with reference to the wavelength λ of the short wavelength light beam 1a for an HD-DVD and the wavelength λ1 of the first long wavelength light beam 1b for a DVD, according to the size of a step s2, when M-NbFD83 is used as an optical medium of the second phase corrector 30. Table 6 and the graphs of Figures 11 and 12 are obtained when the wavelength λ of the short wavelength light beam 1a for an HD-DVD is 400 nm, the wavelength λ2 of the second long wavelength light beam 1c for a CD is 780 nm, and the wavelength λ1 of the first long wavelength light beam 1b for a DVD is 650 nm.

[Table 6]

|  |  | HD-DVD | DVD | CD |
|---|---|---|---|---|
| First Phase Corrector for DVD | Glass Material<br>Step depth<br>Step Number | FCD1<br>1.57 μm<br>5 steps |  |  |
|  | Phase Difference/Step | 0.99 λ | 0.20 λ1 | 0.99 λ2 |
|  | Refractive index | 1.507672 | 1.495285 | 1.492821 |
|  | Remaining Aberration after Correction (OPDrms) | 0.0112 λ | 0.0045 λ1 | 0.0125 λ2 |
| Second Phase Corrector for CD | Glass Material<br>Step depth<br>Step Number | M-NbFD83<br>3.2 μm<br>2 steps |  |  |
|  | Phase Difference/Step | 0.99 λ | 0.00 λ1 | 0.29 λ2 |
|  | Refractive index | 1.873786 | 1.812876 | 1.802912 |
|  | Remaining Aberration after Correction (OPDrms) | 0.0013 λ | 0.0041 λ1 | 0.030 λ2 |

Referring to Table 6 and Figure 11, when FCD1 is used as an optical medium of the first phase corrector 20 and the size of the step s1 is 1.57 μm, a phase difference of 0.99 λ close to an integral multiple with respect to the wavelength λ of the short wavelength light beam 1a for an HD-DVD is generated, a phase difference of 0.99 λ2 close to an integral multiple with respect to the wavelength λ2 of the second long wavelength light beam 1c for a CD is generated, and a phase difference of 0.20 λ1 with respect to the wavelength λ1 of the first long wavelength light beam 1b for a DVD is generated.

When FCD1 is used as an optical medium of the first phase corrector 20, the size of the step s1 is 1.57 μm, and a pattern has a 5-step structure, a change in phase difference is hardly generated as the short wavelength light beam 1a for an HD-DVD and the second long wavelength light beam 1c for a CD pass through the first phase corrector 20. However, a change in phase difference is generated as the first long wavelength light beam 1b for a DVD passes through the first phase corrector 20. Thus, by forming a pattern in the first phase corrector 20 to generate a change in phase difference which can offset the aberration to the first long wavelength light beam 1b for a DVD, the aberration to the first long wavelength light beam 1b for a DVD can be corrected.

Referring to Table 6 and Figure 12, when M-NbFD83 is used as an optical medium of the second phase corrector 30 and the size of the step s2 is 3.2 μm, a phase difference of 0.99 λ close to an integral multiple with respect to the wavelength λ of the short wavelength light beam 1a for an HD-DVD is generated, a phase difference of 0.00 λ1 close to an integral multiple with respect to the wavelength λ1 of the first long wavelength light beam 1b for a DVD is generated, and a phase difference of 0.29 λ2 with respect to the wavelength λ2 of the second long wavelength light beam 1c for a CD is generated.

When M-NbFD83 is used as an optical medium of the second phase corrector 30, the depth of the step s2 is 3.2 μm, and a pattern has a 2-step structure, a change in phase difference is hardly generated as the short wavelength light beam 1a for an HD-DVD and the first long wavelength light beam 1b for a DVD pass through the second phase corrector 30. However, a change in phase difference is generated as the second long wavelength light beam 1c for a CD passes through the second phase corrector 30. Thus, by forming a pattern in the second phase corrector 30 to generate a change in phase difference which can offset the aberration to the second long wavelength light beam 1c for a CD, the aberration to the second long wavelength light beam 1c for a CD can be corrected.

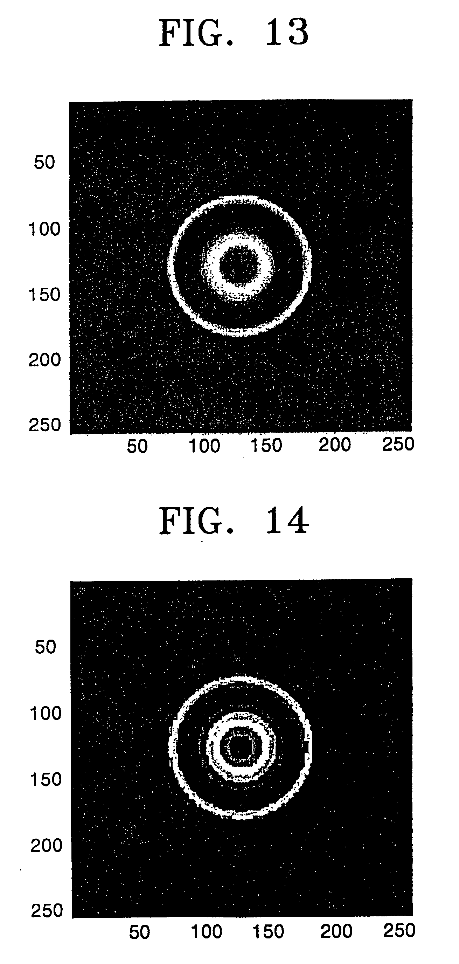

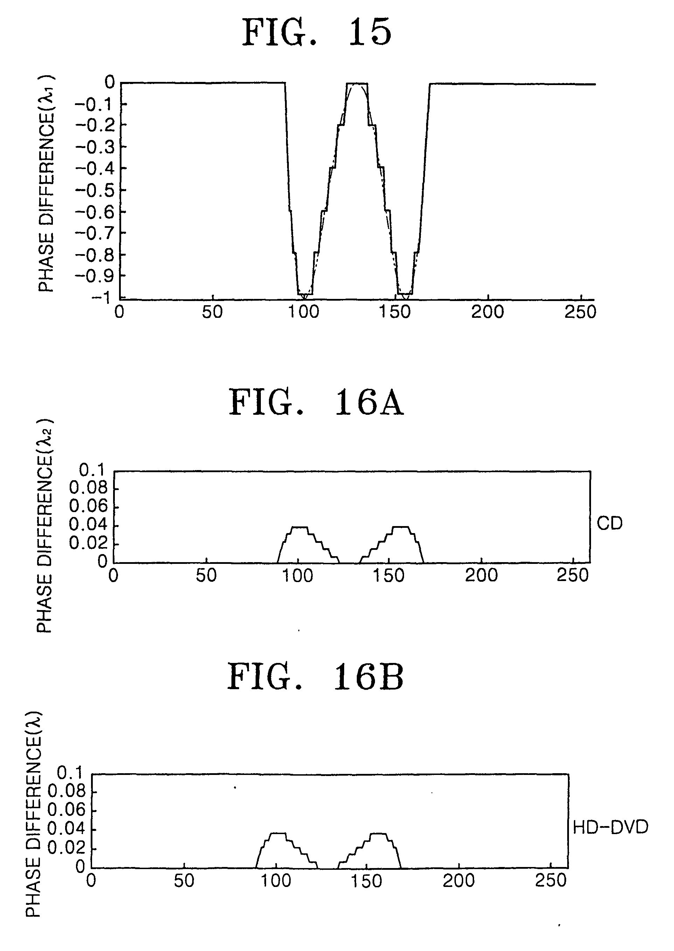

Figure 13 shows, in two dimensions, a phase difference corresponding spherical aberration to be corrected when a DVD is adopted. Figure 14 shows, in two dimensions, a change in phase difference generated in the first phase corrector 20 where a pattern having a 5-step structure is formed to correct the phase difference (aberration) shown in Figure 13. Figure 15 shows a one-dimensional section obtained by overlapping Figures 13 and 14. The phase differences being corrected, shown in Figures 13 and 15, are reverse to the phase difference with respect to the aberration generated when a DVD is adopted. The horizontal axis in Figure 15 has the same scale as that of the horizontal axes of Figures 13 and 14 while the vertical axis presents the phase difference in the unit of wavelength.

As can be seen from Figure 15, according to the first phase corrector 20 according to the present invention, the aberration generated when a DVD is adopted can be sufficiently corrected.

Here, the size of the step s1 of the pattern formed in the first phase corrector 20 is slightly different from an integral multiple of the wavelength $\lambda$ of the short wavelength light beam 1a for an HD-DVD and an integral multiple of the wavelength $\lambda2$ of the second long wavelength light beam 1c for a CD, within the above-described range of error. Thus, a phase difference by the first phase corrector 20 may remain during recording and/or reproduction of a CD, as shown in Figure 16A. Also, during recording and/or reproduction of an HD-DVD, a phase difference due to the first phase corrector 20 may remain as shown in Figure 16B. Although a phase difference by the first phase corrector 20 remains with respect to the short wavelength light beam 1a and the second long wavelength light beam 1c, as shown in Figures 16A and 16B, the amount of aberration due to the remaining phase difference is far less than $0.035\lambda$, as can be seen from Table 6, which is sufficiently allowable. Here, the horizontal axes of Figures 16A and 16B indicate the same scale of the horizontal axis of Figure 15 while the vertical axes presents a phase difference in the unit of wavelength.

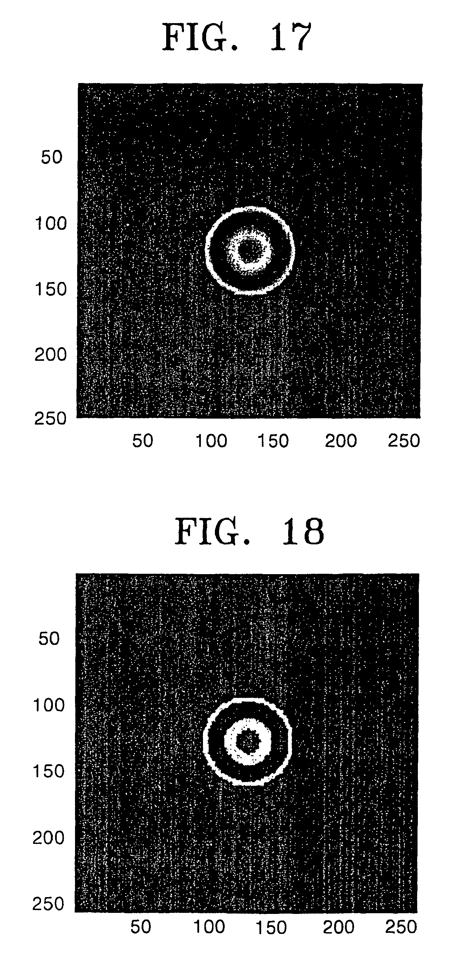

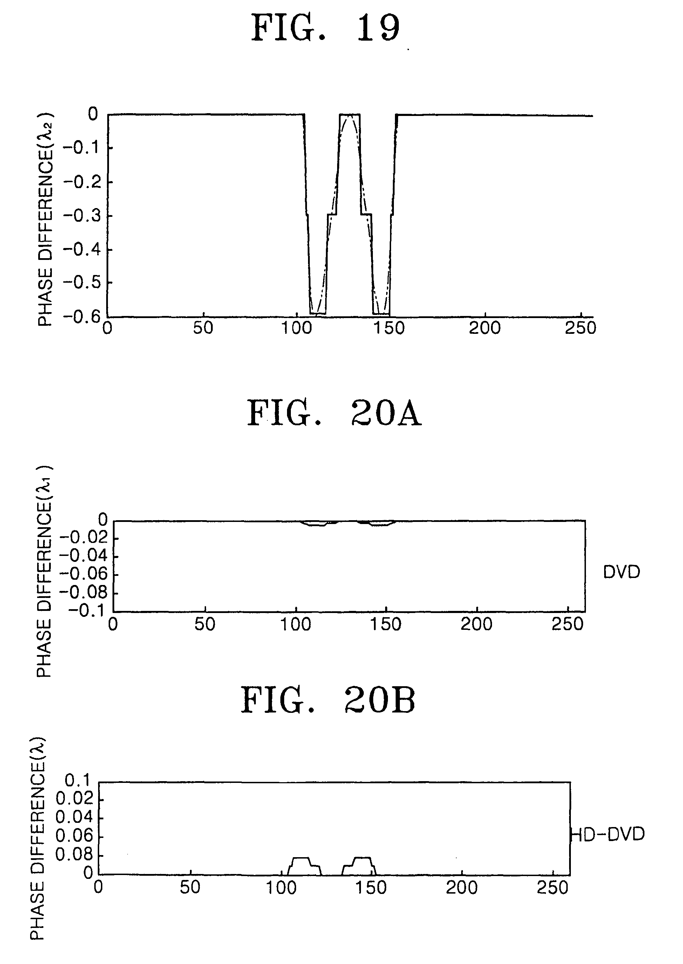

Figure 17 shows a phase difference, in two dimensions, corresponding to spherical aberration to be corrected when a CD is adopted, Figure 18 shows a change in phase difference, in two dimensions, generated in the second phase corrector 30 in which a pattern having a 2-step structure to correct the phase difference (aberration) shown in Figure 17 is formed. Figure 19 shows a one-dimensional section of the phase difference obtained by overlapping Figure 17 and Figure 18. The horizontal axis in Figure 19 has the same scale as that of the horizontal axes of Figures 17 and 18 while the vertical axis present the phase difference in the unit of wavelength.

As can be seen from Figure 19, according to the second phase corrector 30 according to the present invention, the aberration generated when a CD is adopted can be sufficiently corrected.

Here, similar to that of the first phase corrector 20, the size of the step s2 of the pattern formed in the second phase corrector 30 is slightly different from an integral multiple of the wavelength $\lambda$ of the short wavelength light beam 1a for an HD-DVD and an integral multiple of the wavelength $\lambda1$ of the first long wavelength light beam 1b for a DVD, within the above-described range of error. Thus, a phase difference by the second phase corrector 30 may remain during recording and/or reproduction of a DVD, as shown in Figure 20A. Also, a phase difference by the second phase corrector 30 may remain during recording and/or reproduction of an HD-DVD, as shown in Figure 20B. Although a phase difference by the second phase corrector 30 remains with respect to the short wavelength light beam 1a and the first long wavelength light beam 1b as shown in Figures 20A and 20B, the amount of aberration due to the remaining phase difference is within a range of allowance as can be seen from Table 6, which is sufficiently allowable. Here, the horizontal axes of Figures 20A and 20B indicate the same scale of the horizontal axis of Figure 19 while the vertical axes present a phase difference in the unit of wavelength.

Although the stepped pattern of the diffractive device 15 and the first and second phase correctors 20 and 30 are described and illustrated to have physical step structures with reference to Figures 2 and 4, the diffractive device 15 and the first and second phase correctors 20 and 30 according to the present invention can be formed to have a refractive index change structure so that a change in phase difference is generated corresponding to the physical step structure.

For example, an LCD panel manufactured and driven to satisfy the conditions of Equations 5 and 6 and formed to perform a phase correction function to a light beam having a particular wavelength and transmit the light beams having the other two wavelengths, nearly as they are, can be provided as the first and second phase correctors 20 and 30.

In the above, a case in which the compatible optical pickup according to the present invention compatibly adopts the high density optical disc 50a and the first and second low density optical discs 50b and 50c, is described and illustrated. However, the present invention is not limited thereto. For example, the compatible optical pickup according to the present invention can be provided to compatibly adopt the high density optical disc 50a and the first low density optical disc 50b. in this case, the step d of the pattern of a non-polarization diffractive device is preferably formed to satisfy that $(n11-n0')d=g\lambda1$ with respect to the wavelength $\lambda1$ of the first long wavelength light beam when the refractive index of an optical medium forming the diffractive device is n11 with respect to the wavelength $\lambda1$ of the first long wavelength light beam. Here, g is a number within a range of integer$\pm0.07$ and n0' is a refractive index of the air portion with respect to the wavelength $\lambda1$.

Since the optical configuration of the compatible optical pickup according to the present invention for the compatible use of optical discs in two different formats can be obtained by appropriately changing the optical configuration, a detailed description thereof will be omitted herein.

The present inventor confirms that the indications of an optical material (optical medium) used above are copied, as they are, from a catalogue printed by HOYA.

A described above, in the compatible optical pickup according to the present invention, since the diffractive device is provided, defocus of the short wavelength light source due to the mode hopping can be reduced. Since the divergent lens is provided in the above compatible optical pickup, a sufficient working distance can be secured so that the objective lens does not collide with the low density optical disc with respect to the light beam emitted from the long wavelength light source.

Also, when the high density optical disc and the first and second low density optical discs, such as an HD-DVD, a DVD, and a CD, are compatibly recorded and/or reproduced by using three light beams having different wavelengths, since the compatible optical pickup includes a pair of phase correctors for generating a change in phase difference with respect to a light beam having a particular wavelength and transmitting light beams having other two wavelengths, nearly as they are, the aberration generated during recording and/or reproduction of the first and second low density optical discs can be sufficiently corrected.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any combination of the features disclosed in this specification (including any accompanying claims, abstract and drawings), or to any combination, of the steps of any method or process so disclosed, that falls within the scope of the appended claims.

**Claims**

1. A compatible optical pickup comprising:

   an optical unit (1) for emitting a short wavelength light beam (1a) suitable for a high density optical disc (50a) and at least one long wavelength light beam (1b, 1c) suitable for at least one kind of low density optical disc (50b,50c), and for receiving and detecting light beams reflected by the high density optical disc and the low density optical disc;
   an objective lens (40) for forming a light spot on the high density optical disc (50a) and the low density optical disc (50b,50c) by focusing incident short wavelength and long wavelength light beams;
   a diffractve device (15); and a divergent lens (17);
   **characterised in that** the diffractive device (15) is adapted to correct chromatism according to a change in wavelength of the short wavelength light beam (1a) by diffracting the short wavelength light beam output from the optical unit (1) and to transmit, substantially unchanged, the at least one long wavelength light beam; and **in that**
   the divergent lens (17) is adapted to increase a working distance with respect to the at least one kind of low density optical discs (50b, 50c) by refracting the long wavelength light beam (1b, 1c proceeding from the optical unit (1) toward the objective lens (40) and to compensate for the optical power applied to the short wavelength light beam by the diffractive device (15).

2. The compatible optical pickup as claimed in claim 1, wherein the short wavelength light beam (1a) and the long wavelength light beam (1b, 1c) are polarized orthogonally with respect to each other, and the diffractive device (15) is a polarizing holographic device which diffracts a short wavelength light beam (1a) having one polarization and transmits unchanged long wavelength light beam (1b, 1c) having a different polarization orthogonal to the short wavelength light beam (1a).

3. The compatible optical pickup as claimed in claim 2, wherein the polarizing holographic device (15) is of a blazed type to improve an efficiency of first diffraction with respect to the short wavelength light beam (1a).

4. The compatible optical pickup as claimed in any preceding claim, wherein the low density optical disc (50b,50c) comprises first (50b) and second (50c) low density optical discs having different recording density and thickness, and the long wavelength light beam (1b) comprises a first long wavelength light beam having a wavelength of $\lambda 1$

suitable for the first low density optical disc (50b) and a second long wavelength light beam (1c) having a wavelength of λ2 suitable for the second low density optical disc (50c).

5. The compatible optical pickup as claimed in claim 4, wherein the diffractive device (15) is a holographic device where a pattern having a stepped structure is formed, and when refractive indices of an optical medium forming the holographic device are n11 and n22 with respect to the wavelengths λ1 and λ2 of the first and second long wavelength light beams, the size of a step d of the pattern satisfies following equations:

$$(n11-n0')d=g\lambda1,$$

and

$$(n22-n0'')d=h\lambda2,$$

where g and h are numbers within a range of integer±0.07, and n0' and n0" are refractive indices of an air portion with respect to the wavelengths of λ1 and λ2, respectively.

6. The compatible optical pickup as claimed in preceding claim, wherein the first and second low density optical discs (50b, 50c) are a DVD family and a CD family, respectively.

7. The compatible optical pickup as claimed in any preceding claim, wherein the high density optical disc (50a) has a thickness thinner than the first low density optical disc (50b).

8. The compatible optical pickup as claimed in claim 7, wherein the high density optical disc (50a) has a thickness of about 0.1 mm.

9. The compatible optical pickup as claimed in any preceding, wherein the objective lens (40) has an NA of 0.7 or more suitable for the high density optical disc (50a).

10. The compatible optical pickup as claimed in claim 9, wherein a working distance of the objective lens (40) is not more than 0.7 mm.

11. The compatible optical pickup as claimed in claim 9 or 10, wherein the objective lens (40) has an NA of 0.85.

12. The compatible optical pickup as claimed in any of claims 4 to 11, further comprising first and second phase correctors (20,30) for correcting aberration generated when the first and second low density optical discs (50b,50c) are adopted, by generating a change in phase difference with respect to the first and second long wavelength light beams (1b, 1c).

13. The compatible optical pickup as claimed in claim 12, wherein each of the first and second phase correctors (20,30) has a plurality of phase delay areas, and when the amounts of phase delay when the short wavelength light beam having a wavelength of λ and the second long wavelength light beam having a wavelength of λ2 pass through one phase delay area of the first phase corrector are a and a', and the amounts of phase delay when the short wavelength light beam and the second long wavelength light beam pass through the other phase delay area of the first phase corrector adjacent to the one phase delay area are b and b', the first phase corrector satisfies following equations:

$$(a-b)=l\lambda,$$

and

$$(a'-b')=m\lambda2,$$

where , 1 and m are numbers within a range of integer±0.07, and when the amounts of phase delay when the short wavelength light beam having a wavelength of λ and the first long wavelength light beam having a wavelength of λ1 pass through one phase delay area of the second phase corrector are c and c', respectively, and the amounts of phase delay when the short wavelength light beam and the first long wavelength light beam pass through the other phase delay area of the second phase corrector adjacent to the one phase delay area are d and d', respectively, the second phase corrector satisfies following equations:

$$(c-d)=p\lambda,$$

and

$$(c'-d')=q\lambda 1,$$

where p and q are numbers within a range of integer±0.07.

14. The compatible optical pickup as claimed in claim 13, wherein a pattern having a stepped structure is formed in the first phase corrector (20), the step of the pattern corresponds to the respective phase delay areas, and when refractive indices of an optical medium forming the first phase corrector with respect to the wavelengths of λ and λ2 are n and n2, respectively, the size s1 of the step of the pattern satisfies following equations:

$$(n-n0)s1=l\lambda,$$

and

$$(n2-n0'')s1=m\lambda 2,$$

where n0' and n0" are refractive indices of an air portion with respect to the wavelengths of λ and λ2, respectively.

15. The compatible optical pickup as claimed in claim 13 or 14, wherein a pattern having a stepped structure is formed in the second phase corrector (30), the step of the pattern corresponds to the respective phase delay areas, and when refractive indices of an optical medium forming the second phase corrector with respect to the wavelengths of λ and λ1 are n' and n1', respectively, the size s2 of the step of the pattern satisfies following equations:

$$(n'-n0)s2=p\lambda,$$

and

$$(n1'-n0')s2=q\lambda 1,$$

where n0 and n0' are refractive indices of an air portion with respect to the wavelengths of λ and λ1, respectively.

16. The compatible optical pickup as claimed in any preceding claim, further comprising an aperture filter (25) for changing an effective NA of the objective lens (40) with respect to one of the first and second long wavelength light beams (1b, 1c) suitable for recording and/or reproduction of one of the first and second low density optical discs (50b,50c).

17. The compatible optical pickup as claimed in claim 16, wherein the aperture filter (25) is one of a wavelength selective coating member and a holographic diffractive member which are formed to allow a light beam incident at a central portion of the aperture filter to proceed, as it is, and selectively prevent a light beam incident outside the central portion according to a wavelength of the incident light beam.

18. The compatible optical pickup as claimed in claim 16 or 17, wherein the aperture filter (25) is integrally formed with one of the first and second phase correctors (20,30).

19. The compatible optical pickup as claimed in any preceding claim, wherein the short wavelength light beam (1a) is in a blue-violet wavelength area, the first long wavelength light beam (1b) is in a red wavelength area, and the second long wavelength light beam (1c) is in an infrared wavelength area.

20. The compatible optical pickup as claimed in claim 19, wherein the $\lambda$ is substantially in a range between 400-410 nm, the $\lambda 1$ is substantially one of 635 nm and 650 nm, and the $\lambda 2$ is substantially 780 nm.

21. The compatible optical pickup as claimed in any preceding claim, wherein the diffractive device (15) is a holographic device in which a pattern having a stepped structure is formed, and when a refractive index of an optical medium forming the holographic device is n, the size of a step of the pattern of the holographic device satisfies a following equation with respect to the wavelength $\lambda$ of the long wavelength light beam:

$$(n-n0)d=g\lambda.$$

where g is a number within a range of integer$\pm 0.07$, and n0 is a refractive index of an air portion with respect to the wavelength $\lambda$.

22. The compatible optical pickup as claimed in any preceding claim, wherein a blazed type pattern is formed in the holographic device.

23. The compatible optical pickup as claimed in any preceding claim, wherein, when the short wavelength light beam (1a) output from the optical unit (1) and incident on the diffractive device (15) is a parallel beam, the divergent lens (17) offsets optical power applied by the diffractive device (15) to the short wavelength light beam (1a) and makes a parallel short wavelength light beam incident on the objective lens (40).

24. The compatible optical pickup as claimed in any preceding claim, wherein the diffractive device (15) and the divergent lens (17) are integrally driven with the objective lens (40).

25. The compatible optical pickup as claimed in any preceding claim, further comprising a wave plate (69) between the diffractive device (15) and the objective lens (40) to improve an efficiency of light with respect to the short wavelength light beam.

26. The compatible optical pickup as claimed in claim 25, wherein the wave plate (69) substantially performs functions of a quarter wave plate with respect to the short wavelength light beam and a half wave plate with respect to the long wavelength light beam.

27. The compatible optical pickup as claimed in any preceding claim, further comprising a wave plate (69) to improve an efficiency of light with respect to the short wavelength light beam.

28. The compatible optical pickup as claimed in claim 27, wherein the wave plate (69) substantially performs a function of a quarter wave plate with respect to the short wavelength light beam.

**Patentansprüche**

1. Kompatibles optisches Abtastgerät, umfassend:

eine optische Einheit (1) zur Abgabe eines Lichtstrahls (1a) mit kurzer Wellenlänge, der sich für einen hochdichten optischen Datenträger (50a) eignet, und mindestens eines Lichtstrahls (1b, 1c) mit langer Wellenlänge, der sich für mindestens eine Art niedrigdichter optischer Datenträger (50b, 50c) eignet, und zum Empfang und der Erfassung von Lichtstrahlen, die von dem hochdichten optischen Datenträger und dem niedrigdichten optischen Datenträger reflektiert werden;

eine Objektivlinse (40) zur Bildung eines Lichtpunkts auf dem hochdichten optischen Datenträger (50a) und dem niedrigdichten optischen Datenträger (50b, 50c) durch Fokussierung einfallender Lichtstrahlen mit kurzer Wellenlänge und mit langer Wellenlänge;

eine Beugungseinrichtung (15) und eine Zerstreuungslinse (17);

**dadurch gekennzeichnet, dass** die Beugungseinrichtung (15) dazu ausgelegt ist, Chromatismus entsprechend einer Veränderung der Wellenlänge des Lichtstrahls (1a) mit kurzer Wellenlänge durch Beugen des Lichtstrahls mit kurzer Wellenlänge, der von der optischen Einheit (1) ausgegeben wird, zu korrigieren und den mindestens einen Lichtstrahl mit langer Wellenlänge im Wesentlichen unverändert zu übertragen; und

dass die Zerstreuungslinse (17) dazu ausgelegt ist, einen Arbeitsabstand bezüglich der mindestens einen Art von niedrigdichten optischen Datenträgern (50b, 50c) durch Brechen des Lichtstrahls (1b, 1c) mit langer Wellenlänge, der von der optischen Einheit (1) zur Objektivlinse (40) verläuft, zu vergrößern und die Lichtleistung, die an den Lichtstrahl mit kurzer Wellenlänge angelegt ist, durch die Beugungseinrichtung (15) zu kompensieren.

2.  Kompatibles optisches Abtastgerät nach Anspruch 1, wobei der Lichtstrahl (1a) mit kurzer Wellenlänge und der Lichtstrahl (1b, 1c) mit langer Wellenlänge orthogonal zueinander polarisiert sind und die Beugungseinrichtung (15) eine polarisierende holographische Einrichtung ist, die einen Lichtstrahl (1a) mit kurzer Wellenlänge und einer Polarisation beugt und den Lichtstrahl (1b, 1c) mit langer Wellenlänge und einer anderen, zu dem Lichtstrahl (1a) mit kurzer Wellenlänge orthogonalen Polarisation unverändert überträgt.

3.  Kompatibles optisches Abtastgerät nach Anspruch 2, wobei die polarisierende holographische Einrichtung (15) von einer Blaze-Art ist, um die Wirksamkeit der ersten Beugung in Bezug auf den Lichtstrahl (1a) mit kurzer Wellenlänge zu verbessern.

4.  Kompatibles optisches Abtastgerät nach einem der vorhergehenden Ansprüche, wobei der niedrigdichte optische Datenträger (50b, 50c) einen ersten (50b) und einen zweiten (50c) niedrigdichten optischen Datenträger umfasst, die unterschiedliche Aufnahmedichtheit und Dicke haben, und der Lichtstrahl (1b) mit langer Wellenlänge einen ersten Lichtstrahl mit langer Wellenlänge, der eine Wellenlänge von $\lambda1$ hat, die sich für den ersten niedrigdichten optischen Datenträger (50b) eignet, und einen zweiten Lichtstrahl (1c) mit langer Wellenlänge, der eine Wellenlänge von $\lambda2$ hat, die sich für den zweiten niedrigdichten optischen Datenträger (50c) eignet, umfasst.

5.  Kompatibles optisches Abtastgerät nach Anspruch 4, wobei die Beugungseinrichtung (15) eine holographische Einrichtung ist, bei der ein Muster mit einer abgestuften Struktur gebildet ist, und, wenn Brechungsindizes eines die holographische Einrichtung bildenden optischen Mediums n11 und n22 in Bezug auf die Wellenlängen $\lambda1$ und $\lambda2$ des ersten und zweiten Lichtstrahls mit langer Wellenlänge sind, die Größe einer Stufung d des Musters die folgende Gleichung erfüllt:

$$(n11-n0')d = g\lambda1,$$

und

$$(n22-n0'')d = h\lambda2,$$

worin g und h Zahlen innerhalb eines Bereichs von Integer $\pm$ 0,07 und n0' und n0" Brechungsindizes eines Luftanteils in Bezug auf die Wellenlängen von $\lambda1$ bzw. $\lambda2$ sind.

6.  Kompatibles optisches Abtastgerät nach einem der vorhergehenden Ansprüche, wobei der erste und zweite niedrigdichte optische Datenträger (50b, 50c) eine DVD-Familie bzw. eine CD-Familie sind.

7.  Kompatibles optisches Abtastgerät nach einem der vorhergehenden Ansprüche, wobei der hochdichte optische Datenträger (50a) eine Dicke aufweist, die dünner ist als der erste niedrigdichte optische Datenträger (50b).

8. Kompatibles optisches Abtastgerät nach Anspruch 7, wobei der hochdichte optische Datenträger (50a) eine Dicke von ungefähr 0,1 mm aufweist.

9. Kompatibles optisches Abtastgerät nach einem der vorhergehenden Ansprüche, wobei die Objektivlinse (40) eine NA von 0,7 oder mehr aufweist, die sich für den hochdichten optischen Datenträger (50a) eignet.

10. Kompatibles optisches Abtastgerät nach Anspruch 9, wobei ein Arbeitsabstand der Objektivlinse (40) nicht mehr als 0,7 mm beträgt.

11. Kompatibles optisches Abtastgerät nach Anspruch 9 oder 10, wobei die Objektivlinse (40) eine NA von 0,85 hat.

12. Kompatibles optisches Abtastgerät nach einem der Ansprüche 4 bis 11, weiterhin umfassend einen ersten und zweiten Phasenkorrektor (20, 30) zum Korrigieren einer Aberration, die beim Annehmen des ersten und zweiten niedrigdichten optischen Datenträger (50b, 50c) erzeugt wird, indem eine Veränderung der Phasendifferenz in Bezug auf den ersten und zweiten Lichtstrahl (1b, 1c) mit langer Wellenlänge erzeugt wird.

13. Kompatibles optisches Abtastgerät nach Anspruch 12, wobei der erste und zweite Phasenkorrektor (20, 30) jeweils mehrere Phasenverzögerungsbereiche aufweist und, wenn die Beträge der Phasenverzögerung, wenn der Lichtstrahl mit kurzer Wellenlänge und einer Wellenlänge λ und der zweite Lichtstrahl mit langer Wellenlänge und einer Wellenlänge von λ2 durch den einen Phasenverzögerungsbereich des ersten Phasenkorrektors laufen, a und a' sind und die Beträge der Phasenverzögerung, wenn der Lichtstrahl mit kurzer Wellenlänge und der zweite Lichtstrahl mit langer Wellenlänge durch den anderen Phasenverzögerungsbereich des ersten Phasenkorrektors laufen, der neben dem einen Phasenverzögerungsbereich liegt, b und b' sind, der erste Phasenkorrektor folgende Gleichungen erfüllt:

$$(a-b)=l\lambda$$

und

$$(a'-b')=m\lambda2,$$

worin 1 und m Zahlen innerhalb eines Bereichs von Integer ± 0,07 sind, und, wenn die Beträge der Phasenverzögerung, wenn der Lichtstrahl mit kurzer Wellenlänge und einer Wellenlänge λ und der erste Lichtstrahl mit langer Wellenlänge und einer Wellenlänge von λ1 durch den einen Phasenverzögerungsbereich des zweiten Phasenkorrektors laufen, c bzw. c' sind und die Beträge der Phasenverzögerung, wenn der Lichtstrahl mit kurzer Wellenlänge und der erste Lichtstrahl mit langer Wellenlänge durch den anderen Phasenverzögerungsbereich des zweiten Phasenkorrektors laufen, der neben dem einen Phasenverzögerungsbereich liegt, d bzw. d' sind, der zweite Phasenkorrektor folgende Gleichungen erfüllt:

$$(c-d)=p\lambda$$

und

$$(c'-d')=q\lambda1,$$

worin p und q Zahlen innerhalb eines Bereichs von Integer ± 0,07 sind.

14. Kompatibles optisches Abtastgerät nach Anspruch 13, wobei in dem ersten Phasenkorrektor (20) ein Muster mit einer abgestuften Struktur gebildet ist, wobei die Stufung des Musters den jeweiligen Phasenverzögerungsbereichen entspricht, und, wenn Brechungsindizes eines den ersten Phasenkorrektor bildenden optischen Mediums n bzw.

n2 in Bezug auf die Wellenlängen λ und λ2 sind, die Größe der Stufung des Musters die folgende Gleichung erfüllt:

$$(n-n0)s1=l\lambda$$

und

$$(n2-n0'')s1=m\lambda2,$$

wobei n0 und n0" Brechungsindizes eines Luftanteils in Bezug auf die Wellenlängen von λ bzw. λ2 sind.

15. Kompatibles optisches Abtastgerät nach Anspruch 13 oder 14, wobei in dem zweiten Phasenkorrektor (30) ein Muster mit einer abgestuften Struktur gebildet ist, wobei die Stufung des Musters den jeweiligen Phasenverzögerungsbereichen entspricht, und, wenn Brechungsindizes eines den zweiten Phasenkorrektor bildenden optischen Mediums n' bzw. n1' in Bezug auf die Wellenlängen λ und λ1 sind, die Größe s2 der Stufung des Musters die folgende Gleichung erfüllt:

$$(n'-n0)s2=p\lambda$$

und

$$(n1'-n0')s2=q\lambda1,$$

wobei n0 und n0' " Brechungsindizes eines Luftanteils in Bezug auf die Wellenlängen von λ bzw. λ1 sind.

16. Kompatibles optisches Abtastgerät nach einem der vorhergehenden Ansprüche, weiterhin umfassend einen Aperturfilter (25) zur Änderung einer effektiven NA der Objektivlinse (40) in Bezug auf den ersten oder zweiten Lichtstrahl (1b, 1c) mit langer Wellenlänge, die sich zur Aufnahme und/oder Reproduzierung des ersten oder zweiten niedrigdichten optischen Datenträgers (50b, 50c) eignen.

17. Kompatibles optisches Abtastgerät nach Anspruch 16, wobei der Aperturfilter (25) ein wellenlängenselektives Beschichtungselement oder ein holographisches Beugungselement ist, die dazu ausgebildet sind, einen Lichtstrahl, der an einem mittleren Teil des Aperturfilters einfällt, wie er ist durchzulassen und einen Lichtstrahl, der außerhalb des mittleren Teils einfällt, gemäß einer Wellenlänge des einfallenden Lichtstrahls selektiv abzuhalten.

18. Kompatibles optisches Abtastgerät nach Anspruch 16 oder 17, wobei der Aperturfilter (25) integral mit dem ersten oder zweiten Phasenkorrektor (20, 30) gebildet ist.

19. Kompatibles optisches Abtastgerät nach einem der vorhergehenden Ansprüche, wobei der Lichtstrahl (1a) mit kurzer Wellenlänge in einem blauvioletten Wellenlängenbereich liegt, der erste Lichtstrahl (1b) mit langer Wellenlänge in einem roten Wellenlängenbereich liegt und der zweite Lichtstrahl (1c) mit langer Wellenlänge in einem infraroten Wellenlängenbereich liegt.

20. Kompatibles optisches Abtastgerät nach Anspruch 19, wobei die λ im Wesentlichen in einem Bereich zwischen 400-410 nm, die λ1 im Wesentlichen bei 635 nm oder 650 nm und die λ2 im Wesentlichen bei 780 nm liegen.

21. Kompatibles optisches Abtastgerät nach einem der vorhergehenden Ansprüche, wobei die Beugungseinrichtung (15) eine holographische Einrichtung ist, bei der ein Muster mit einer abgestuften Struktur gebildet ist, und, wenn ein Brechungsindex eines die holographische Einrichtung bildenden optischen Mediums n ist, die Größe einer Stufung des Musters der holographischen Einrichtung eine folgende Gleichung in Bezug auf die Wellenlänge λ des Lichtstrahls mit langer Wellenlänge erfüllt:

$$(n-n0)d=g\lambda,$$

worin g eine Zahl innerhalb eines Bereichs von Integer $\pm$ 0,07 und n0 ein Brechungsindex eines Luftanteils in Bezug auf die Wellenlänge $\lambda$ ist.

22. Kompatibles optisches Abtastgerät nach einem der vorhergehenden Ansprüche, wobei ein Muster der Blaze-Art in der holographischen Einrichtung gebildet ist.

23. Kompatibles optisches Abtastgerät nach einem der vorhergehenden Ansprüche, wobei, wenn der Lichtstrahl (1a) mit kurzer Wellenlänge, der von der optischen Einheit (1) ausgegeben wird und auf die Beugungseinrichtung (15) fällt, ein paralleler Strahl ist, die Zerstreuungslinse (17) die Lichtleistung, die von der Beugungseinrichtung (15) an den Lichtstrahl (1a) mit kurzer Wellenlänge angelegt ist, ausgleicht und einen parallelen Lichtstrahl mit kurzer Wellenlänge in die Objektivlinse (40) einfallen lässt.

24. Kompatibles optisches Abtastgerät nach einem der vorhergehenden Ansprüche, wobei die Beugungseinrichtung (15) und die Zerstreuungslinse (17) integral mit der Objektivlinse (40) angetrieben werden.

25. Kompatibles optisches Abtastgerät nach einem der vorhergehenden Ansprüche, weiterhin umfassend eine Wellenplatte (69) zwischen der Beugungseinrichtung (15) und der Objektivlinse (40), um eine Wirksamkeit des Lichts in Bezug auf den Lichtstrahl mit kurzer Wellenlänge zu verbessern.

26. Kompatibles optisches Abtastgerät nach Anspruch 25, wobei die Wellenplatte (69) im Wesentlichen die Funktion einer Viertelwellenplatte in Bezug auf den Lichtstrahl mit kurzer Wellenlänge und die einer Halbwellenplatte in Bezug auf den Lichtstrahl mit langer Wellenlänge ausübt.

27. Kompatibles optisches Abtastgerät nach einem der vorhergehenden Ansprüche, weiterhin umfassend eine Wellenplatte (69), um eine Wirksamkeit des Lichts in Bezug auf den Lichtstrahl mit kurzer Wellenlänge zu verbessern.

28. Kompatibles optisches Abtastgerät nach Anspruch 27, wobei die Wellenplatte (69) im Wesentlichen eine Funktion einer Viertelwellenplatte in Bezug auf den Lichtstrahl mit kurzer Wellenlänge ausübt.

**Revendications**

1. Tête de lecture optique compatible, comprenant :

   un module optique (1) destiné a émettre un faisceau lumineux à courte longueur d'onde (1a) adapté à un disque optique à haute densité (50a), et au moins un faisceau lumineux à grande longueur d'onde (1b, 1c) adapté à au moins un type de disque optique à faible densité (50b, 50c), et à recevoir et à détecter des faisceaux lumineux réfléchis par le disque optique à haute densité et le disque optique à faible densité ;
   une lentille objective (40) destinée à former un point lumineux sur le disque optique à haute densité (50a) et le disque optique à faible densité (50b, 50c) en focalisant les faisceaux lumineux à courte longueur d'onde et à grande longueur d'onde incidents ;
   un dispositif de diffraction (15) ; et
   une lentille divergente (17) ;
   **caractérisée en ce que** le dispositif de diffraction (15) est conçu pour corriger le chromatisme en fonction d'une variation de longueur d'onde du faisceau lumineux à courte longueur d'onde (1a) en assurant la diffraction du faisceau lumineux à courte longueur d'onde émis par le module optique (1) et pour transmettre sans variation sensible ledit au moins un faisceau lumineux à grande longueur d'onde ; et **en ce que**
   la lentille divergente (17) est conçue pour accroître une distance de travail vis-à-vis dudit au moins un type de disque optique à faible densité (50b, 50c) en assurant la réfraction du faisceau lumineux à grande longueur d'onde (1b ,1c) se propageant du module optique (1) vers la lentille objective (40) et pour compenser la puissance optique appliquée au faisceau lumineux à courte longueur d'onde par le dispositif de diffraction (15).

2. Tête de lecture optique compatible selon la revendication 1, le faisceau lumineux à courte longueur d'onde (1a) et le faisceau lumineux à grande longueur d'onde (1b, 1c) étant polarisés orthogonalement l'un par rapport à l'autre, et le dispositif de diffraction (15) étant un dispositif holographique polarisant qui assure la diffraction d'un faisceau lumineux à courte longueur d'onde (1a) possédant une certaine polarisation et qui transmet sans variation un faisceau lumineux à grande longueur d'onde (1b, 1c) possédant une polarisation différente, orthogonale à celle du faisceau lumineux à courte longueur d'onde (1a).

3. Tête de lecture optique compatible selon la revendication 2, le dispositif holographique polarisant (15) étant d'un type blazé dans le but d'améliorer le rendement d'une première diffraction par rapport au faisceau lumineux à courte longueur d'onde (1a).

4. Tête de lecture optique compatible selon l'une quelconque des revendications précédentes, le disque optique à faible densité (50b, 50c) comprenant des premier (50b) et deuxième (50c) disques optiques à faible densité de densités d'enregistrement et d'épaisseurs différentes, et le faisceau lumineux à grande longueur d'onde (1b) comprenant un premier faisceau lumineux à grande longueur d'onde possédant une longueur d'onde λ1 adaptée au premier disque optique à faible densité (50b) et un deuxième faisceau lumineux à grande longueur d'onde (1c) possédant une longueur d'onde λ2 adaptée au deuxième disque optique à faible densité (50c).

5. Tête de lecture optique compatible selon la revendication 4, le dispositif de diffraction (15) étant un dispositif holographique incorporant un motif possédant une structure en gradin, et n11 et n22 désignant respectivement les indices de réfraction d'un support optique formant le dispositif holographique par rapport aux longueurs d'onde λ1 et λ2 des premier et deuxième faisceaux lumineux à grande longueur d'onde, la dimension d'un gradin d du motif vérifiant les équations suivante :

$$(n11-n0')d=g\lambda 1,$$

et

$$(n22-n0'')d=h\lambda 2,$$

où g et h sont des nombres dans un intervalle entier±0,07, et n0' et n0" sont respectivement les indices de réfraction d'une portion d'air par rapport aux longueurs d'onde λ1 et λ2.

6. Tête de lecture optique compatible selon l'une quelconque des revendications précédentes, les premier et deuxième disques optiques à faible densité (50b, 50c) étant respectivement une famille de DVD et une famille de CD.

7. Tête de lecture optique compatible selon l'une quelconque des revendications précédentes, le disque optique à haute densité (50a) possédant une épaisseur inférieure à celle du premier disque optique à faible densité (50b).

8. Tête de lecture optique compatible selon la revendication 7, le disque optique à haute densité (50a) possédant une épaisseur d'environ 0,1 mm.

9. Tête de lecture optique compatible selon l'une quelconque des revendications précédentes, la lentille objective (40) possédant une ouverture numérique NA supérieure ou égale à 0,7 adaptée au disque optique à haute densité (50a).

10. Tête de lecture optique compatible selon la revendication 9, une distance de travail de la lentille objective (40) n'excédant pas 0,7 mm.

11. Tête de lecture optique compatible selon la revendication 9 ou 10, la lentille objective (40) possédant une ouverture numérique NA de 0,85.

12. Tête de lecture optique compatible selon l'une quelconque des revendications 4 à 11, comprenant en outre des premier et deuxième correcteurs de phase (20, 30) destinés à corriger l'aberration créée lors de l'utilisation des premier et deuxième disques optiques à faible densité (50b, 50c) en produisant une variation de différence de phase par rapport aux premier et deuxième faisceaux lumineux à grande longueur d'onde (1b, 1c).

**13.** Tête de lecture optique compatible selon la revendication 12, chacun des premier et deuxième correcteurs de phase (20, 30) présentant une pluralité de secteurs de retard de phase, et,

a et a' désignant respectivement les quantités de retard de phase lorsque le faisceau lumineux à courte longueur d'onde possédant une longueur d'onde $\lambda$ et le deuxième faisceau lumineux à grande longueur d'onde possédant une longueur d'onde $\lambda 2$ traversent un certain secteur de retard de phase du premier correcteur de phase, et b et b' désignant respectivement les quantités de retard de phase lorsque le faisceau lumineux à courte longueur d'onde et le deuxième faisceau lumineux à grande longueur d'onde traversent un autre secteur de retard de phase du premier correcteur de phase adjacent au certain secteur de retard de phase, le premier correcteur de phase vérifiant les équations suivante :

$$(a-b) = l\lambda,$$

et

$$(a'-b') = m\lambda 2,$$

où 1 et m sont des nombres dans un intervalle entier $\pm 0,07$ et

c et c' désignant respectivement les quantités de retard de phase lorsque le faisceau lumineux à courte longueur d'onde possédant une longueur d'onde $\lambda$ et le premier faisceau lumineux à grande longueur d'onde possédant une longueur d'onde $\lambda 1$ traversent un certain secteur de retard de phase du deuxième correcteur de phase, et d et d' désignant respectivement les quantités de retard de phase lorsque le faisceau lumineux à courte longueur d'onde et le premier faisceau lumineux à grande longueur d'onde traversent un autre secteur de retard de phase du deuxième correcteur de phase adjacent au certain secteur de retard de phase, le deuxième correcteur de phase vérifiant les équations suivante :

$$(c-d) = p\lambda,$$

et

$$(c'-d') = q\lambda 1,$$

où p et q sont des nombres dans un intervalle entier $\pm 0,07$.

**14.** Tête de lecture optique compatible selon la revendication 13, le premier correcteur de phase (20) incorporant un motif possédant une structure en gradin, le gradin du motif correspondant aux secteurs de retard de phase respectifs et, n et n2 désignant respectivement les indices de réfraction d'un support optique formant le premier correcteur de phase par rapport aux longueurs d'onde $\lambda$ et $\lambda 2$, la dimension s1 du gradin du motif vérifiant les équations suivante :

$$(n-n0) s1 = l\lambda,$$

et

$$(n2-n0'') s1 = m\lambda 2,$$

où n0 et n0" sont respectivement les indices de réfraction d'une portion d'air par rapport aux longueurs d'onde $\lambda$ et $\lambda 2$.

**15.** Tête de lecture optique compatible selon la revendication 13 ou 14, le deuxième correcteur de phase (30) incorporant un motif possédant une structure en gradin, le gradin du motif correspondant aux secteurs de retard de phase respectifs et, n' et n1' désignant respectivement les indices de réfraction d'un support optique formant le deuxième correcteur de phase par rapport aux longueurs d'onde λ et λ1, la dimension s2 du gradin du motif vérifiant les équations suivante :

$$(n'-n0)s2=p\lambda,$$

et

$$(n1'-n0')s2=q\lambda 1,$$

où n0 et n0' sont respectivement les indices de réfraction d'une portion d'air par rapport aux longueurs d'onde λ et λ1.

16. Tête de lecture optique compatible selon l'une quelconque des revendications précédentes, comprenant en outre un filtre à ouverture (25) destiné à faire varier une ouverture numérique NA effective de la lentille objective (40) par rapport à l'un des premier et deuxième faisceaux lumineux à grande longueur d'onde (1b, 1c) convenant a l'enregistrement et/ou la reproduction d'un des premier et deuxième disques optiques à faible densité (50b, 50c).

17. Tête de lecture optique compatible selon la revendication 16, le filtre à ouverture (25) étant l'un d'un élément de revêtement sélectif en longueur d'onde et d'un élément de diffraction holographique formés pour permettre à un faisceau lumineux incident sur une partie centrale du filtre à ouverture de se propager tel quel, et pour bloquer de façon sélective un faisceau lumineux incident en dehors de la partie centrale en fonction de sa longueur d'onde.

18. Tête de lecture optique compatible selon la revendication 16 ou 17, l'un des premier et deuxième correcteurs de phase (20, 30) étant intégré au filtre à ouverture (25).

19. Tête de lecture optique compatible selon l'une quelconque des revendications précédentes, le faisceau lumineux à courte longueur d'onde (1a) se situant dans un domaine de longueurs d'onde du bleu au violet, le premier faisceau lumineux à grande longueur d'onde (1b) se situant dans un domaine de longueurs d'onde du rouge, et le deuxième faisceau lumineux à grande longueur d'onde (1c) se situant dans un domaine de longueurs d'onde de l'infrarouge.

20. Tête de lecture optique compatible selon la revendication 19, la longueur d'onde λ étant sensiblement comprise entre 400 et 410 nm, la longueur d'onde λ1 étant sensiblement comprise entre 635 nm et 650 nm et la longueur d'onde λ2 valant sensiblement 780 nm.

21. Tête de lecture optique compatible selon l'une quelconque des revendications précédentes, le dispositif de diffraction (15) étant un dispositif holographique incorporant un motif possédant une structure en gradin, et n désignant l'indice de réfraction d'un support optique formant le dispositif holographique, la dimension d'un gradin du motif du dispositif holographique vérifiant l'équation suivante par rapport à la longueur d'onde λ du faisceau lumineux à grande longueur d'onde :

$$(n-n0)d=g\lambda,$$

où g est un nombre dans un intervalle entier ±0,07, et n0 est un indice de réfraction d'une portion d'air par rapport à la longueur d'onde λ.

22. Tête de lecture optique compatible selon l'une quelconque des revendications précédentes, le dispositif holographique incorporant un motif de type blazé.

23. Tête de lecture optique compatible selon l'une quelconque des revendications précédentes, lorsque le faisceau lumineux à courte longueur d'onde (1a) émis par le module optique (1) et incident sur le dispositif de diffraction (15) est un faisceau parallèle, la lentille divergente (17) compensant la puissance optique appliquée au faisceau lumineux à courte longueur d'onde (1a) par le dispositif de diffraction (15), et provoquant l'incidence d'un faisceau lumineux à courte longueur d'onde parallèle sur la lentille objective (40).

24. Tête de lecture optique compatible selon l'une quelconque des revendications précédentes, le dispositif de diffraction (15) et la lentille divergente (17) étant entraînés solidairement avec la lentille objective (40).

25. Tête de lecture optique compatible selon l'une quelconque des revendications précédentes, comprenant en outre une lame d'onde (69) placée entre le dispositif de diffraction (15) et la lentille objective (40) dans le but d'améliorer un rendement lumineux par rapport au faisceau lumineux à courte longueur d'onde.

26. Tête de lecture optique compatible selon la revendication 25, la lame d'onde (69) jouant sensiblement le rôle d'une lame quart d'onde vis-à-vis du faisceau lumineux à courte longueur d'onde, et d'une lame demi-onde vis-à-vis du faisceau lumineux à grande longueur d'onde.

27. Tête de lecture optique compatible selon l'une quelconque des revendications précédentes, comprenant en outre une lame d'onde (69) dans le but d'améliorer un rendement lumineux par rapport au faisceau lumineux à courte longueur d'onde.

28. Tête de lecture optique compatible selon la revendication 27, la lame d'onde (69) jouant sensiblement le rôle d'une lame quart d'onde vis-à-vis du faisceau lumineux à courte longueur d'onde.

# FIG. 1

# FIG. 2

RADIAL DIRECTION

# FIG. 3

—— PHASE DIFFERENCE TO $\lambda_1$
—·— PHASE DIFFERENCE TO $\lambda_2$

# FIG. 4

# FIG. 5

—— PHASE DIFFERENCE TO $\lambda$
—·— PHASE DIFFERENCE TO $\lambda_2$

# FIG. 6

EP 1 313 095 B1

# FIG. 7A

# FIG. 7B

# FIG. 7C

FIG. 8

# FIG. 9A

# FIG. 9B

# FIG. 9C

# FIG. 10A

0.00 RELATIVE
FIELD HEIGHT
(0.000)°

Y-PAN             X-PAN

—— 405 nm
—·— 406 nm

# FIG. 10B

0.00 RELATIVE
FIELD HEIGHT
(0.000)°

Y-PAN             X-PAN

—— 405 nm
—·— 406 nm

# FIG. 11

PHASE DIFFERENCE TO λ
PHASE DIFFERENCE TO λ2

# FIG. 12

PHASE DIFFERENCE TO λ
PHASE DIFFERENCE TO λ1

# FIG. 13

# FIG. 14

# FIG. 15

# FIG. 16A

# FIG. 16B

## FIG. 17

## FIG. 18

# FIG. 19

# FIG. 20A

DVD

# FIG. 20B

HD-DVD

**EP 1 313 095 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001209966 A
- JP 2001093179 A
- EP 1154417 A